# FASCICULE DE BREVET EUROPEEN

(11) **EP 4 420 522 B1**
(45) Date de publication et mention de la délivrance du brevet: **28.01.2026**
(21) Numéro de dépôt: 24188237.2
(22) Date de dépôt: 18.06.2021
(51) Int. Cl.: A23G 3/54, A23G 4/20, A23G 3/34, A23G 4/10

(54) **CONFISERIE DRAGÉIFIÉE À CROUSTILLANCE AMÉLIORÉE**
VERZUCKERTE SÜSSWAREN MIT VERBESSERTER VERARBEITBARKEIT
CONFECTIONERY PRODUCT WITH IMPROVED CRISPNESS

(30) Priorité: 30.06.2020 FR 2006907
(43) Date de publication de la demande: 28.08.2024
(62) Demande divisionnaire de: 21735153.5
(73) Titulaire: ROQUETTE FRERES, 62136 Lestrem (FR)
(72) Inventeur: BUSOLIN, André, 59130 LAMBERSART (FR); DEMEULEMEESTER, Patrice, 59126 LINSELLES (FR)
(74) Mandataire: Plasseraud IP

(56) Documents cités:
- EP-A1- 2 025 245
- US-A- 3 527 646
- US-A1- 2013 052 252
- US-A1- 2018 000 112

## Description

### Domaine technique

L'invention a pour objet l'utilisation d'un nouveau mélange particulier d'au moins un agent sucrant et d'au moins un amidon prégélatinisé non modifié chimiquement dans un revêtement cristallin dur. Elle vise également un produit de confiserie dragéifié comprenant un revêtement cristallin dur à base d'un tel mélange, un procédé d'obtention par dragéification dure d'un revêtement cristallin dur autour d'un noyau, ledit revêtement cristallin dur étant à base dudit mélange particulier et une composition pré-mélangée sèche de dragéification comprenant un tel mélange.

### Technique antérieure

La dragéification dure est une opération unitaire employée dans bon nombre de domaines parmi lesquels ceux de la confiserie et de la pharmacie. Elle peut concerner également l'industrie des additifs que sont les arômes, les édulcorants, les vitamines, les enzymes, les acides et les produits à base de plantes. Cette opération consiste à créer un revêtement dur cristallin à la surface de produits solides, afin de les protéger pour diverses raisons ou bien afin de les rendre attractifs visuellement ou gustativement. Très généralement, cette opération unitaire est réalisée en plaçant de tels produits en tant que noyaux à revêtir, dans une turbine de dragéification.

La dragéification dure nécessite l'utilisation d'au moins un sirop et/ou d'une suspension contenant des matières cristallisables. Le revêtement dur et cristallin s'obtient alors par application de ce sirop ou de cette suspension sur les noyaux et évaporation de l'eau apportée par ceux-ci grâce à un séchage par air sec, ce qui provoque la cristallisation. Entre les différentes applications d'un tel sirop ou d'une telle suspension, il est également possible de pulvériser des poudres contenant des matières cristallisables.

Ce cycle application-séchage doit être répété un très grand nombre de fois, de l'ordre de dix à quatre-vingt fois afin d'obtenir le taux de grossissage voulu.

Le « taux de grossissage » représente l'accroissement en poids des produits, considérés en fin d'opération par rapport au début, rapporté au poids final des produits. La dragéification dure peut être précédée ou suivie par d'autres techniques d'enrobage. En particulier, les techniques suivantes qui se réalisent souvent aussi en employant une turbine de dragéification peuvent être retenues :
- le gommage qui est une technique dans laquelle sont utilisés des sirops de matières non cristallisables et en général non hygroscopiques comme les gommes arabiques, les amidons et les celluloses modifiés, les maltodextrines. Cette technique permet, après une ou deux applications du sirop de gommage sur le produit à revêtir, de créer un film vitreux faisant barrière à la migration de l'oxygène, de l'eau ou des matières grasses. Dans ce procédé peuvent également être employées conjointement à ces sirops non cristallisables, des poudres de diverses natures, de façon à fixer l'eau apportée par les sirops. Dans d'autres cas encore des sucres ou des polyols fondus ou liquéfiés par des solvants sont employés. Le revêtement vitreux, dur et cassant, est obtenu alors par refroidissement ou par évaporation des solvants.
- la dragéification tendre qui consiste à créer un revêtement très souple et tendre à la surface des produits. Ce revêtement est obtenu par applications répétées d'un sirop non cristallisable comme en général les hydrolysats d'amidons, et, optionnellement, d'une poudre, en général du saccharose cristallisé. Le revêtement est habituellement épais. Le taux de grossissage pour cette technique est de l'ordre de 10 à 80 % voire davantage. Il est à noter que la matière constitutive du sirop est habituellement différente de celle de la poudre.
- le brillantage qui consiste par emploi de corps gras ou de cires généralement apportés sous forme cristallisée en paillettes ou de solutions alcooliques, à revêtir les produits d'une très fine pellicule grasse afin de réduire les transferts d'eau depuis ou vers les produits enrobés mais aussi d'embellir leur surface.

Le terme dragéification dure employé dans la présente invention comprend également les techniques très voisines que sont le lissage et le givrage.

Le lissage consiste en une ou plusieurs applications ou charges d'un sirop cristallisable dilué par rapport à celui utilisé en dragéification dure. Le but est souvent de parfaire l'aspect de surface de produits dragéifiés.

Le givrage quant à lui vise également à améliorer l'aspect des produits, mais aussi à isoler ces derniers de l'humidité de l'atmosphère. Cette technique ressemble à une dragéification dure, en ce sens qu'un sirop cristallisable est utilisé. La différence essentielle réside dans le fait que le nombre de cycles réalisés n'est que d'un, deux ou trois seulement.

On s'intéresse donc dans le cadre de la présente invention à la dragéification dure proprement dite, au lissage, au givrage ainsi qu'à ces techniques combinées. Une dragéification dure est souvent suivie d'un lissage.

### Problème technique

Des procédés d'enrobage ont été appliqués en utilisant des polyols.

Par le terme « polyol », on entend les sucre-alcools obtenus par réduction de sucres.

De saveur sucrée généralement inférieure à celle attribuée au saccharose qu'ils tendent à remplacer en alimentation humaine mais également dans les formulations pharmaceutiques et diététiques, les polyols présentent l'avantage de posséder une valeur calorique fixée en Europe aux deux tiers environ de celle du sucre.

Plusieurs documents font état de la possibilité de réaliser une dragéification dure par emploi d'un polyol, tel que le maltitol, dans la mesure où la pureté de ce polyol est très élevée. C'est le cas en particulier :
- du brevet EP 201412, dont la demanderesse est titulaire, où sont dévoilés à la fois un procédé de dragéification par emploi d'un sirop de maltitol d'une pureté dépassant 92 % et un produit possédant un revêtement dur cristallin contenant au moins 90 % de maltitol.
- et la demande de brevet JP 61263915 au nom de la société HAYASHIBARA, relative à l'emploi en dragéification dure d'un sirop contenant du maltitol de pureté supérieure à 90 % et un agent de cohésion.

Concernant la dragéification dure au xylitol, la nécessité de retenir du xylitol de haute pureté est mentionnée directement ou indirectement dans les documents suivants :
- le brevet FR 2.342.668 de la société FERRERO, où il est dit aussi qu'il est impératif d'employer du xylitol renfermant au plus 5 % d'autres polyols tels que le sorbitol et/ou le mannitol,
- le brevet US 4.127.677 au nom de la société LIFE SAVERS où il est préconisé d'employer une solution contenant sur sec de 95 à 99,5 % de xylitol, obtenue par dissolution à froid de xylitol cristallin puis chauffage du mélange,
- le document "FOOD TECHNOLOGICAL EVALUATION OF XYLITOL" de F. VOIROL, ADVANCES in FOOD RESEARCH, 1982, vol 28, 373-403, où il est dit simplement qu'il est avantageux de préparer une solution sursaturée à 85 % de matière sèche en xylitol,
- le brevet EP 273.000 de la société WARNER-LAMBERT Company dans lequel est décrit un produit comestible revêtu d'un enrobage composé de 40 à 70 % de xylitol, le complément à 100 % étant formé d'au moins un agent filmogène, d'au moins un liant et d'au moins un agent de charge de nature minérale et éventuellement d'au moins un plastifiant,
- et les brevets US 4.681.766 et US 4.786.511 dont la société WARNER-LAMBERT Company est également titulaire, dans lesquels sont décrits une solution de dragéification dure et un revêtement de dragéification contenant tous deux 30 à 80 % d'un édulcorant, de préférence le xylitol, 1 à 15 % de gomme arabique et 0,05 à 10 % d'un sel de calcium.

En ce qui concerne la dragéification avec isomalt, on connaît aussi les brevets US 4,792,453 et 5,248,508 de la Société WRIGLEY où seul en tant que polyol, l'isomalt est dissous dans l'eau pour préparer les solutions de dragéification.

Dans le cas du mannitol, bien qu'il soit fait état dans la demande EP 308.317 déposée par la Société SANOFI de la possibilité de réaliser une dragéification dure avec du mannitol, sans que toutefois soient données concrètement les conditions d'une telle opération, il apparaît très difficile d'y parvenir. Ceci est confirmé par le document de F. DEVOS "Coating with sorbitol, a comparaison of properties of sorbitol-mannitol, others polyols and sucrose" in The Manufacturing Confectioner, 1980, vol. 60 p. 26, où l'auteur explique que la solubilité du mannitol est trop faible pour permettre de bonnes conditions de dragéification dure et que trop d'eau serait alors à évaporer. Ceci explique qu'il n'ait a priori jamais existé sur le marché de produit dragéifié avec du mannitol.

Une technique de dragéification décrite notamment dans les brevets et demandes de brevet US 5,270,061; WO 93/18663, WO 95/07621 et WO 95/07622 de la société WRIGLEY, consiste en une dragéification "duale" ou "double". Il s'agit de commencer la dragéification avec un sirop contenant un polyol pur comme le xylitol, le maltitol ou le lactitol puis de la continuer et de la terminer par emploi d'un autre sirop de polyol également pur mais de nature différente du premier polyol, comme l'isomalt. Cette technique de double dragéification vise essentiellement à réduire le coût de la dragéification par substitution partielle d'un polyol par un autre et à réduire l'hygroscopicité de la couche dragéifiée. Elle semble toutefois très coûteuse en temps et difficile à mettre en œuvre industriellement.

Une autre technique décrite dans la demande de brevet EP 625.311 dont la demanderesse est titulaire concerne des applications successives d'un sirop de polyol de haute pureté et d'une poudre contenant le même polyol à l'état pur et de ne pas procéder, comme d'ordinaire, à un séchage forcé par air sec et chaud dans la turbine de dragéification. Ce procédé permet de réduire très fortement les temps de dragéification et d'obtenir des revêtements relativement croustillants après stockage de quelques heures.

L'un des désavantages de l'emploi des sirops à base de polyols, tel que le xylitol ou l'isomalt, est donné par le fait que ces sirops de polyols ne sont pas opacifiants et donnent un effet marbré si le noyau à enrober n'est pas lisse et de couleur uniforme.

Il a été très souvent conseillé d'incorporer aux sirops de dragéification d'autres substances en plus des polyols. C'est le cas par exemple dans le brevet EP 229.594 de la société WARNER-LAMBERT, il est préconisé d'associer au polyol retenu de la polyvinylpyrrolidone.

D'autres auteurs ont proposé d'utiliser, en dehors de la gélatine et de la gomme arabique dont l'emploi en dragéification est très ancien, des liants tels que des celluloses modifiées, des sirops de glucose, du pullulan ou diverses gommes, à des taux relativement bas, généralement inférieurs à 5 % en sec. Il a été constaté que ces substances améliorent l'adhérence de la couche dragéifiée au noyau ainsi que la cohésion de la couche dragéifiée. Ces caractéristiques agissent aussi dans une certaine mesure sur la croustillance.

Ainsi, des compositions comprenant un amidon en tant qu'agent liant ont été proposées. Le document US2010316759 a trait à des produits enrobés sans sucre comprenant un noyau et un enrobage, l'enrobage comprenant de l'amidon de riz natif, au moins un polyol et un additif, tel que la gomme arabique. D'autres exemples de documents concernant des produits enrobés d'un mélange à base d'un polyol et de gomme arabique sont WO94/16575, WO94/14331, EP0506251 et US4317838.

Le document US20180000112 propose des compositions d'enrobage comprenant de l'amidon de pois prégélatinisé ayant subi des modifications chimiques, au moins un polyol et de la gomme arabique. Le document US3527646 décrit quant à lui des produits revêtus d'un film amorphe d'un mélange d'amidons prégélatinisés et de sucrose dans de faibles quantités pour améliorer les propriétés barrière aux graisses et à l'air du produit enrobé. Le document US2013052252 décrit également un produit enrobé dont l'enrobage comprend un amidon prégélatinisé et du sucre granulé, qui n'est pas utilisé dans une couche de revêtement cristallin dur. Le produit est également enrobé avec un sirop riche en gomme arabique et le revêtement ainsi formé comprend 1,9% de gomme arabique. Ce document ne suggère pas de former des confiseries exemptes de gomme arabique. Ce document est également silencieux quant à la nature de l'amidon prégélatinisé et quant à une quelconque amélioration de la croustillance liée à l'utilisation de l'enrobage le comprenant.

Ainsi, l'agent liant dans les produits sans sucre est représenté commercialement presque exclusivement par la gomme arabique. Elle est facile d'utilisation, naturelle, assure une bonne adhérence entre la dragéification et le noyau. Par ailleurs, elle permet d'obtenir des revêtements présentant une bonne croustillance, un avantage particulièrement recherché pour les produits dragéifiés.

La gomme arabique est un polysaccharide à haut poids moléculaire avec une viscosité inhabituellement basse, se comportant comme un liquide newtonien jusqu'à une concentration de 35% ; il se dissout à des concentrations de 55% à 60% pour former un sirop épais. Cette faible viscosité est attribuée à sa ramification structurelle, ce qui en fait une molécule globulaire. Cette ramification empêche la formation de micelles, contrairement aux gommes linéaires, minimisant la liaison hydrogène intermoléculaire lorsqu'elle est hydratée dans l'eau. En conséquence, il forme un film faible. Sa solution devient collante à des concentrations élevées mais donne une texture cassante lorsqu'elle est séchée. Il forme un film brillant lorsqu'il est coulé sur une surface qui se fissure selon un motif unique. Il possède une propriété émulsifiante attribuée à la présence de protéines liées de manière covalente à une partie de la fraction polysaccharidique formant un complexe de glycoprotéines à très haut poids moléculaire de plus de 2 millions de Daltons.

La gomme arabique est également utilisée dans la dragéification dure des gommes à mâcher et des confiseries enrobées de chocolat pour lier et renforcer le revêtement qui est composé de sucre ou d'alcools de sucre. Elle est ajoutée à la recette de sirop afin de le distribuer par pulvérisation ou manuellement sur les centres. La gomme arabique est utilisée uniquement dans les premières couches pour des raisons de coût, ou dans toutes les couches, en particulier dans les dragéifications sans sucre pour aider à construire une couche solide de revêtement autour des centres de chewing-gum. Le besoin d'un bon liant dans les sirops d'enrobage est nécessité par l'utilisation à l'échelle industrielle de turbines d'enrobage plus grandes pour augmenter la capacité, ce qui entraîne une fissuration voire une rupture du revêtement dragéifié lorsque les centres tombent dans la turbine. Dans de nombreux cas, la fissuration se produit également pendant l'emballage, le transport du produit fini et lorsque les consommateurs secouent le récipient d'emballage.

Dans les applications de film comestible et de paillettes où la viscosité, la clarté et le motif de fissuration du film spécifique ainsi que l'adhérence / la libération de la bande de coulée sont critiques, la gomme arabique est actuellement le matériau de gomme majoritairement utilisé à cette fin.

En raison de l'unicité de la gomme arabique, les solutions pour la remplacer dans diverses utilisations telles que les applications alimentaires, pharmaceutiques et industrielles sont rares. Par conséquent, il est intéressant de trouver d'autres solutions pour remplacer la gomme arabique.

Une alternative permettant de substituer la gomme arabique tout en recherchant de garder les mêmes propriétés du produit final dragéifie est proposée dans le document EP2666368. Ainsi, la gomme arabique est remplacée par d'autres gommes, telle que la gomme xanthane ou la gomme de caroube, par des polysaccharides, telles que la pectine, l'agar, les amidons modifiés, comme par exemple les maltodextrines.

Dans le cas des pectines, l'un des inconvénients est que la dragéification est plus cassante, ce qui génère de nombreux coins cassés lors de la production.

Une autre alternative à l'utilisation de la gomme arabique en tant qu'agent de renforcement d'enrobage est donnée par le document US2004/0156993. A cet effet, un mélange de dragéification à base d'un polyol et d'un amidon modifié chimiquement par oxydation et/ou traité par un acide est proposé.

Toutefois, il apparaît que l'ajout de telles substances visqueuses perturbe d'une manière significative la cristallisation du polyol utilisé de sorte que la couche dragéifiée présente une cristallinité moindre. Cela expliquerait qu'elle ait alors tendance à devenir collante. De plus, ces substances ne permettent pas, bien au contraire, de réduire les temps de dragéification.

En dehors de la recherche de moyens visant à réduire les coûts de la dragéification dure aux polyols et notamment de réduire les temps de dragéification, on a souvent recherché des solutions visant à augmenter la croustillance et le croquant de revêtements dragéifiés aux polyols. Ces facteurs, tout comme le goût, agissent directement au niveau de l'acceptation des produits et du renouvellement des actes d'achat par les consommateurs.

Les solutions connues exposées ci-dessus ne permettent pas d'assurer à la fois l'obtention d'une dureté et d'une croustillance améliorée des revêtements cristallins dragéifiés aux polyols, tout en assurant un aspect visuel satisfaisant en termes de couleur et d'uniformité, d'adhésion des couches au sein du revêtement et de stabilité de stockage dans le temps.

Il est donc du mérite de la demanderesse d'avoir trouvé que ce besoin de revêtements cristallins dragéifiés aux polyols pour une utilisation en termes d'amélioration de la croustillance pouvait être atteint, contre toute attente, avec un amidon prégélatinisé non modifié chimiquement. Ce revêtement ne présente pas ou très peu de gomme arabique alors qu'il était connu jusqu'à présent que cette dernière était indispensable pour obtenir des revêtements cristallins dont la croustillance est importante et présentant des bonnes propriétés d'adhésion et de dureté.

### Résumé de l'invention

La présente invention est définie par les revendications.

A cet effet et selon un premier objet, l'invention propose l'utilisation d'un mélange d'au moins un agent sucrant et au moins un amidon prégélatinisé non modifié chimiquement pour améliorer l'indice de blancheur du revêtement cristallin dur d'un produit dragéifié, ledit amidon n'ayant pas subi de modifications chimiques, ledit revêtement et ledit mélange étant exempt de dioxyde de titane, et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

Selon un autre objet, il est proposé un produit de confiserie dragéifié comportant un revêtement cristallin dur comprenant un mélange d'au moins un agent sucrant et au moins un amidon prégélatinisé non modifié chimiquement, ledit amidon n'ayant pas subi de modifications chimiques,
ledit revêtement et ledit mélange étant exempt de dioxyde de titane, et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

Selon un autre objet, il est proposé un procédé d'obtention par dragéification dure d'un revêtement cristallin dur autour d'un noyau, le procédé comprenant les étapes suivantes :
- préparation d'un sirop de dragéification en mélangeant au moins un agent sucrant et au moins un amidon prégélatinisé non modifié chimiquement avec un solvant,
- création à la surface du noyau d'un revêtement cristallin par au moins une application dudit sirop de dragéification ;

ledit amidon n'ayant pas subi de modifications chimiques,
ledit revêtement et ledit sirop ainsi préparé étant exempt de dioxyde de titane, et dans lequel ledit revêtement et ledit sirop comprennent :
   - entre 80 et 99,90% en poids dudit agent sucrant relatif à la masse totale de matière sèche du mélange, préférentiellement entre 90 et 99,90% et
   - entre 0,1 et 20% en poids dudit amidon relatif à la masse totale de matière sèche du mélange, préférentiellement entre 0,1 et 10%.

Selon un autre objet, il est proposé une composition pré-mélangée sèche de dragéification comprenant un mélange d'au moins un agent sucrant et d'au moins un amidon prégélatinisé non modifié chimiquement, ledit amidon n'ayant pas subi de modifications chimiques,
ladite composition étant exempte de dioxyde de titane, caractérisée en ce que la composition comprend :
- entre 80 et 99,90% en poids dudit agent sucrant relatif à la masse totale de matière sèche de la composition, préférentiellement entre 90 et 99,90 %, tout préférentiellement entre 95 et 99% et
- entre 0, 1 et 20% en poids dudit amidon relatif à la masse totale de matière sèche de la composition, préférentiellement entre 0,1 et 10%, tout préférentiellement entre 1 et 5%.

Selon l'invention, les mélanges, le sirop, le revêtement et la composition pré-mélangée comprennent :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

Les caractéristiques exposées dans les paragraphes suivants peuvent, optionnellement, être mises en œuvre. Elles peuvent être mises en œuvre indépendamment les unes des autres ou en combinaison les unes avec les autres.

### Exposé de l'invention

Un premier objet de l'invention concerne l'utilisation d'un mélange d'au moins un agent sucrant et au moins un amidon prégélatinisé non modifié chimiquement pour améliorer la croustillance du revêtement cristallin dur d'un produit dragéifié, ledit amidon n'ayant pas subi de modifications chimiques,
ledit revêtement et ledit mélange étant exempt de dioxyde de titane, et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

Ledit amidon n'a donc pas subi de modifications chimiques telles que l'oxydation ou le greffage chimique.

Par amidon « prégélatinisé » ou amidon « prégel », on entend un amidon qui a été cuit puis séché en amidonnerie rendant l'amidon soluble dans l'eau froide (en anglais « *cold water soluble starch* »), cette cuisson pouvant être réalisée sur un tambour séchoir ou dans une extrudeuse.

La prégélatinisation de l'amidon est une opération bien connue de l'homme du métier dans laquelle la cuisson s'effectue généralement à une température en-dessous de la température de gélatinisation de l'amidon.

Il est connu que l'amidon est stocké dans les organes et tissus de réserve dans un état granulaire, c'est-à-dire sous la forme de granules semi-cristallins. Cet état semi-cristallin est essentiellement dû à la présence des macromolécules d'amylopectine.

A l'état natif, les grains d'amidon présentent un taux de cristallinité qui varie de 15 à 45% et qui dépend essentiellement de l'origine botanique et du traitement éventuel qu'il a subi. L'amidon granulaire, placé sous lumière polarisée, présente alors en microscopie une croix noire caractéristique, dite « croix de Malte ». Ce phénomène de biréfringence positive est dû à l'organisation semi-cristalline de ces granules : l'orientation moyenne des chaînes de polymères étant radiale.

Pour une description plus détaillée de l'amidon granulaire, on pourra se référer au chapitre II intitulé « Structure et morphologie du grain d'amidon » de S. Perez, dans l'ouvrage « Initiation à la chimie et à la physico-chimie macromoléculaires », Première Edition, 2000, Volume 13, pages 41 à 86, Groupe Français d'Etudes et d'Applications des Polymères.

L'amidon sec renferme une teneur en eau qui varie de 12 à 20 % selon l'origine botanique. Cette teneur en eau dépend évidemment de l'humidité résiduelle du milieu (pour une aw = 1, l'amidon peut fixer jusqu'à 0,5 g d'eau par gramme d'amidon).

Le chauffage, en excès d'eau, d'une suspension d'amidon à des températures proches de sa température de gélatinisation entraîne un gonflement irréversible des grains et conduit à leur dispersion, puis à leur solubilisation.

Pour une plage de température donnée appelée « plage de gélatinisation », le grain d'amidon va gonfler très rapidement et perdre sa structure semi-cristalline (perte de la biréfringence).

Tous les grains seront gonflés au maximum sur un intervalle de température de l'ordre de 5 à 10°C. On obtient un empois composé de grains gonflés qui constituent la phase dispersée et de molécules dispersées (correspondant principalement à de l'amylose) qui épaississent la phase continue aqueuse. Les propriétés rhéologiques de l'empois dépendent de la proportion relative de ces deux phases, dispersée et aqueuse, et du volume de gonflement des grains. La plage de gélatinisation est variable selon l'origine botanique de l'amidon.

Par « amidon prégélatinisé non modifié chimiquement » on entend un amidon qui a été cuit puis séché en amidonnerie rendant l'amidon soluble dans l'eau froide (en anglais « cold-water soluble starch »), cette cuisson pouvant être réalisée sur un tambour séchoir ou dans une extrudeuse, et qui n'a pas subi de modifications chimiques. Des exemples de telles modifications chimiques sont : la réticulation, l'oxydation, l'estérification, telle que l'acétylation, phosphorylation, succination etc, l'éthérification, telle que l'hydroxypropylation, l'hydroxyethylation etc., les réactions internes à l'amidon lors de la formation des dextrines telles que les réactions de condensation ou réversion, de transglucosydation ou encore l'anhydrisation ou toute combinaison de celles-ci.

Une solution d'amidon soluble dans l'eau froide peut présenter une viscosité Brookfield supérieure à 100 mPa.s, lorsqu'on introduit 10 g de cet amidon dans 90 g d'eau à 20°C puis on agite la solution ainsi obtenue pendant une heure.

De préférence, le revêtement obtenu ou le mélange employé pour la préparation du revêtement comprennent moins de 1 % en poids de gomme arabique relatif au poids total sec du revêtement ou du mélange, de préférence comprennent moins de 0,5 % en poids de gomme arabique relatif au poids total sec du revêtement ou du mélange ledit revêtement ou ledit mélange, de préférence encore, ledit revêtement ou ledit mélange étant exempt de gomme arabique.

Par « gomme arabique » on entend à la fois la gomme arabique dure (ou kitir) et la gomme arabique friable (ou talha).

De préférence, le revêtement obtenu ou le mélange employé pour la préparation du revêtement sont exempts de polysorbate, voire d'agents émulsifiants.

En utilisant un mélange d'au moins un agent sucrant et au moins un amidon prégélatinisé non modifié chimiquement pour obtenir un revêtement cristallin dur d'un produit dragéifié, la croustillance dudit produit est améliorée par rapport aux autres liants. Lorsque le produit dragéifié est un produit de confiserie dragéifiée, il s'agit d'un avantage indéniable lors de la dégustation. En effet, un liant est nécessaire pour les revêtements avec ces polyols pour donner au revêtement plus de croquant pendant la mastication ainsi que pour protéger le revêtement contre les dommages pendant le traitement et la manipulation.

Comme en fait état G. RIBADEAU DUMAS dans sa conférence intitulée "Actual manufacturing possibilities for sugarless hard and soft coating : techniques - problems - solutions" in Süßwaren - Dragee - Tagung, Mai 1994, Solingen, Zentralfachshule der Deutschen Süßwarenwirtschaft e.V., la croustillance est une grandeur organoleptique subjective et complexe, qui peut toutefois être appréhendée par des mesures mécaniques de dureté et de friabilité à l'aide d'un appareil de type INSTRON. C'est ainsi qu'il lui a été possible de démontrer de façon objective que la croustillance varie avec les caractéristiques du noyau à dragéifier comme avec celles de la couche dragéifiée.

De plus, de manière surprenante, l'apport d'amidon prégélatinisé non modifié chimiquement augmente la dureté et la croustillance du produit fini par rapport à la gomme arabique ou d'autres amidons modifiés chimiquement ou d'amidon natif non prégélatinisé, mais également, comme démontré par la suite l'indice de blancheur.

De préférence, le revêtement obtenu ou le mélange employé pour la préparation du revêtement comprennent moins de 1,5%, par exemple moins de 0,5 % en poids de dioxyde de titane relatif au poids total sec dudit revêtement ou dudit mélange, de préférence moins de 0,1 % en poids de dioxyde de titane relatif au poids total sec dudit revêtement ou dudit mélange, de préférence encore, ledit revêtement ou ledit mélange est exempt de dioxyde de titane (TiO₂).

Le dioxyde de titane est un agent de blanchiment couramment utilisé dans les mélanges de dragéification. La suppression du dioxyde de titane dans un revêtement dure amène les phénomènes suivants : perte de blancheur, revêtement moins opaque, impact visuel négatif de la coloration du noyau, aspect moins uniforme.

Cet amidon particulier permet ainsi de substituer la gomme arabique et le dioxyde titane tout en gardant les mêmes fonctionnalités de ceux-ci, par exemple le rôle d'agent liant, toute en permettant une amélioration de la blancheur et de la dragéification. La présente invention concerne ainsi également l'utilisation d'amidon prégélatinisé non modifié chimiquement pour améliorer la blancheur et/ou la croustillance d'un revêtement cristallin dur d'un produit dragéifié comprenant un agent sucrant. Cette utilisation est particulièrement intéressante lorsque ledit revêtement cristallin est exempt de gomme arabique. Cette utilisation est également particulièrement intéressante lorsque ledit revêtement cristallin est exempt de dioxyde de titane. Selon cette variante, les quantités en gomme arabique ne sont pas nécessairement limitées : en d'autres termes, la quantité de gomme arabique dans le revêtement cristallin dur, le mélange et la composition-pré-mélangée peut être de moins de 1 % en poids de gomme arabique relatif au poids total sec mais également 1% ou plus en poids de gomme arabique relatif au poids total sec. L'invention porte sur l'utilisation d'un mélange d'au moins un agent sucrant et au moins un amidon prégélatinisé non modifié chimiquement pour améliorer la croustillance du revêtement cristallin dur d'un produit dragéifié, ledit amidon n'ayant pas subi de modifications chimiques, ledit revêtement et ledit mélange étant exempt de dioxyde de titane. Selon un autre objet, il est proposé un produit de confiserie dragéifié comportant un revêtement cristallin dur comprenant un mélange d'au moins un agent sucrant et au moins un amidon prégélatinisé non modifié chimiquement, ledit amidon n'ayant pas subi de modifications chimiques, ledit revêtement et ledit mélange étant exempt de dioxyde de titane. Selon un autre objet, il est proposé une composition pré-mélangée sèche de dragéification comprenant un mélange d'au moins un agent sucrant et d'au moins un amidon prégélatinisé non modifié chimiquement, ledit amidon n'ayant pas subi de modifications chimiques, ladite composition étant exempte de dioxyde de titane. Selon un autre objet, il est proposé un procédé d'obtention par dragéification dure d'un revêtement cristallin dur autour d'un noyau, le procédé comprenant les étapes suivantes :
- préparation d'un sirop de dragéification en mélangeant au moins un agent sucrant et au moins un amidon prégélatinisé non modifié chimiquement avec un solvant,
- création à la surface du noyau d'un revêtement cristallin par au moins une application dudit sirop de dragéification ;
ledit revêtement et ledit sirop ainsi préparé étant exempt de dioxyde de titane.

Pour l'ensemble de ces variantes où le revêtement cristallin est exempt de dioxyde de titane, l'agent sucrant et l'amidon prégélatinisé non modifié chimiquement sont présents dans les proportions, préférées ou non, définies dans la présente demande. Ainsi, il est précisé de manière explicite que selon ces variantes, les mélanges, le sirop, le revêtement et la composition pré-mélangée comprennent également :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

De préférence, l'amidon prégélatinisé non modifié chimiquement présente une viscosité allant de 0,001 à 0,30 Pa.s, mesurée selon un test B, le test B consistant à mesurer la viscosité, déterminée à une fréquence de 10 s-1 et à 20°C, d'une solution aqueuse à 5% en masse d'amidon prégélatinisé.

La solution aqueuse peut être préparée dans un pot en verre hermétique dans lequel on pèse 95 g d'eau et mise au bain marie à 70°C. 5 grammes d'amidon prégélatinisé est ajouté sous agitation (650 rpm) par barreau aimanté (lentement pour éviter des grumeaux). La solution ainsi obtenue est laissée au bain marie à 70°C pendant 12 heures.

Après refroidissement de la solution, la mesure de la viscosité peut être réalisée sur un rhéomètre MCR301 d'Anton Paar équipé de Cylindres concentriques CC27 dont la température de 20°C est régulée par Peltier avec un temps d'équilibre avant mesure de 5 minutes, puis un cisaillement de 0.05 à 1000s-1 en 6 minutes (rampe log) est appliqué. La viscosité déterminée à une fréquence de 10 s-1 est ainsi relevée.

Avantageusement, l'amidon prégélatinisé non modifié chimiquement présente une viscosité allant de 0,02 à 0,25 Pa.s, préférentiellement de 0,04 à 0,20 Pa.s selon le test B, le test B consistant à mesurer la viscosité, déterminée à une fréquence de 10 s⁻¹ et à 20°C, d'une solution aqueuse à 5% en masse d'amidon prégélatinisé

De préférence, l'amidon prégélatinisé non modifié chimiquement est un amidon natif prégélatinisé ayant subi uniquement un traitement de prégélatinisation.

Par « amidon natif prégélatinisé », on entend un amidon prégélatinisé n'ayant pas subi d'autres modifications physiques ou chimiques outre la prégélatinisation. Plus particulièrement, on entend un amidon prégélatinisé n'ayant pas subi un traitement de fluidification.

De préférence, l'agent agent sucrant est un polyol.

De préférence, le polyol est choisi parmi le sorbitol, le mannitol, le maltitol, le xylitol, l'isomalt, l'érythritol et le lactitol ou un mélange de ceux-ci, de préférence le maltitol ou le xylitol.

Ainsi, dans le cas d'un revêtement sans sucre, l'agent sucrant est notamment un polyol pouvant être choisi parmi le sorbitol, le mannitol, le maltitol, le xylitol, l'isomalt, l'érythritol et le lactitol, préférentiellement le maltitol, l'isomalt et le xylitol, plus préférentiellement le maltitol, le xylitol, tout préférentiellement le maltitol.

Par ailleurs, un agent sucrant formant ledit mélange peut être choisi parmi au moins un sucre ou au moins un polyol ou un mélange de ceux-ci.

Dans le cas d'un revêtement avec sucre, l'agent sucrant peut notamment être un sucre choisi parmi le saccharose, le dextrose, l'isomaltulose (palatinose), le maltose et le galactose, de préférence, le saccharose, le dextrose ou le galactose, tout préférentiellement le saccharose.

Alternativement, dans le cas d'un revêtement avec sucre, le mélange peut comprendre au moins deux agents sucrants choisis parmi au moins un sucre et au moins un polyol, ledit sucre étant choisi parmi le saccharose, le dextrose, l'isomaltulose (palatinose), le maltose et le galactose, de préférence, le saccharose, le dextrose ou le galactose et ledit polyol étant choisi parmi le sorbitol, le mannitol, le maltitol, le xylitol, l'isomalt, l'érythritol et le lactitol, préférentiellement le maltitol, l'isomalt et le xylitol, plus préférentiellement le maltitol, le xylitol, tout préférentiellement le maltitol.

De préférence, l'amidon prégélatinisé non modifié chimiquement est choisi parmi l'amidon de pois prégélatinisé non modifié chimiquement, l'amidon de maïs prégélatinisé non modifié chimiquement ou l'amidon maïs cireux prégélatinisé non modifié chimiquement.

Des tels amidons prégélatinisés non modifiés chimiquement sont commercialisés sous la marque PREGEFLO^{®}, comme par exemple sous le nom de Pregeflo^{®} C100 Waxy, Pregeflo^{®} M, Pregeflo^{®} L100G par Roquette.

Ledit mélange comprend :
- entre 80 et 99,90% en poids dudit agent sucrant relatif à la masse totale de matière sèche du mélange, préférentiellement entre 90 et 99,90%, par exemple entre 91 et 99,80%, ou encore entre 92,50 et 99,70%, ou encore entre 93 et 99,60%, ou encore entre 93,50 et 99,50%, ou encore entre 94 et 99,40%, ou encore entre 94,50 et 99,20%, tout préférentiellement entre 95 et 99% et
- entre 0, 1 et 20% en poids dudit amidon relatif à la masse totale de matière sèche du mélange, préférentiellement entre 0,1 et 10%, par exemple entre 0,20 et 9%, ou encore entre 0,30 et 7,50%, ou encore entre 0,40 et 7%, ou encore entre 0,50 et 6,50%, ou encore entre 0,60 et 6%, ou encore entre 0,80 et 5,50%, tout préférentiellement entre 1 et 5%.

De préférence, le ratio massique entre l'agent sucrant et l'amidon prégélatinisé non modifié chimiquement est compris entre 4 et 10 000, de préférence entre 10 et 1000, tout préférentiellement entre 20 et 100.

De préférence, le mélange est utilisé pour la fabrication des revêtements des produits dragéifiés comme ceux indiqués ci-dessous, ces produits pouvant comprendre en plus dans leur revêtement ou dans un revêtement tel qu'obtenu par le procédé d'obtention par dragéification dure d'un revêtement cristallin décrit par la suite, des ingrédients tels que des agents aromatisants, des édulcorants artificiels, des agents dispersants et émulsifiants, des agents colorants, des agents blanchissants, des agents filmogènes et des agents liants.

De préférence, les constituants du mélange sont en poudre, la taille moyenne d50 de la poudre allant de 10 à 1000 µm, par exemple entre 100 et 800 µm.

Le d50 est déterminé sur un granulomètre à diffraction LASER type LS 230 de la société BECKMAN-COULTER, équipé de son module de dispersion poudre (voie sèche), en suivant le manuel technique et les spécifications du constructeur. La gamme de mesure du granulomètre à diffraction LASER type LS 230 est de 0,04 µm à 2.000 µm.

Un deuxième objet de l'invention concerne un produit de confiserie dragéifié comportant un revêtement cristallin dur comprenant un mélange d'au moins un agent sucrant et au moins un amidon prégélatinisé non modifié chimiquement, ledit amidon n'ayant pas subi de modifications chimiques,
ledit revêtement et ledit mélange étant exempt de dioxyde de titane, et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

Ledit amidon n'a donc pas subi de modifications chimiques telles que l'oxydation ou le greffage chimique

Le revêtement cristallin comprend un mélange d'au moins un agent sucrant et au moins un amidon prégélatinisé non modifié chimiquement tel que celui utilisé selon le premier objet.

De préférence, l'amidon prégélatinisé employé est obtenu par une prégélatinisation, telle que décrite ci-dessus.

De préférence, le revêtement obtenu ou le mélange employé pour la préparation du revêtement comprennent moins de 1 % en poids de gomme arabique relatif au poids total sec du revêtement ou du mélange, de préférence comprennent moins de 0,5 % en poids de gomme arabique relatif au poids total sec du revêtement ou du mélange ledit revêtement ou ledit mélange, de préférence encore, ledit revêtement ou ledit mélange étant exempt de gomme arabique.

De préférence, le revêtement obtenu ou le mélange employé pour la préparation du revêtement sont exempts de polysorbate, voire d'agents émulsifiants.

De préférence, le revêtement obtenu ou le mélange employé pour la préparation du revêtement comprennent moins de 1,5%, par exemple moins de 0,5 % en poids de dioxyde de titane relatif au poids total sec dudit revêtement ou dudit mélange, de préférence moins de 0,1 % en poids de dioxyde de titane relatif au poids total sec dudit revêtement ou dudit mélange, de préférence encore, ledit revêtement ou ledit mélange est exempt de dioxyde de titane (TiO2). Un des avantages de l'invention est que, même lorsque le revêtement comprend de faibles quantités (ou est exempt) de dioxyde de titane, le revêtement présente une blancheur améliorée par rapport à un revêtement comprenant de la gomme arabique. De la même manière, lorsque le revêtement comprend en outre des colorants, la coloration du produit enrobé selon l'invention est très satisfaisante.

Le revêtement cristallin dur peut, en raison de sa croustillance élevée, constituer un revêtement intérieur, intermédiaire ou extérieur de revêtements complexes tels que ceux préparés par dragéification double ou tels que ceux composés de plusieurs couches dragéifiées de nature ou de texture différente.

Des produits de confiserie pouvant comprendre un tel revêtement peuvent être des chewing-gums, des comprimés, des losanges, des gelées, des œufs liqueur, des pâtes à mâcher, des bonbons durs, des produits chocolatés.

Alternativement, ce revêtement peut être réalisé en utilisant en tant que noyau à dragéifier des produits très divers. Il peut s'agir de produits alimentaires autres que les confiseries tels que des produits diététiques, des fruits secs et des graines mais aussi des produits pharmaceutiques ou vétérinaires comme les pilules, des comprimés et des produits pour animaux.

De préférence, le produit de confiserie dragéifié est un chewing-gum.

De préférence, l'amidon prégélatinisé non modifié chimiquement présente une viscosité allant de 0,001 à 0,30 Pa.s, avantageusement de 0,02 à 0,25 Pa.s, préférentiellement de 0,04 à 0,20 Pa.s, mesurée selon un test B, le test B consistant à mesurer la viscosité, déterminée à une fréquence de 10 s-1 et à 20°C, d'une solution aqueuse à 5% en masse d'amidon prégélatinisé.

De préférence, l'amidon prégélatinisé non modifié chimiquement présent dans le revêtement cristallin est un amidon natif prégélatinisé.

Par « amidon natif prégélatinisé », on entend un amidon prégélatinisé n'ayant pas subi d'autres modifications physiques ou chimiques outre la prégélatinisation. Plus particulièrement, on entend un amidon prégélatinisé n'ayant pas subi un traitement de fluidification.

Le revêtement peut être choisi parmi un revêtement avec sucre ou sans sucre, tel que décrit précédemment.

De préférence, l'agent agent sucrant est un polyol.

De préférence, le polyol est choisi parmi le sorbitol, le mannitol, le maltitol, le xylitol, l'isomalt, l'érythritol et le lactitol ou un mélange de ceux-ci, de préférence le maltitol ou le xylitol.

De préférence, l'amidon prégélatinisé non modifié chimiquement est choisi parmi l'amidon de pois prégélatinisé non modifié chimiquement, l'amidon de maïs natif prégélatinisé non modifié chimiquement ou l'amidon maïs cireux natif prégélatinisé non modifié chimiquement.

Ledit mélange comprend :
- entre 80 et 99,90% en poids dudit agent sucrant relatif à la masse totale de matière sèche du mélange, préférentiellement entre 90 et 99,90%, par exemple entre 91 et 99,80%, ou encore entre 92,50 et 99,70%, ou encore entre 93 et 99,60%, ou encore entre 93,50 et 99,50%, ou encore entre 94 et 99,40%, ou encore entre 94,50 et 99,20%, tout préférentiellement entre 95 et 99% et
- entre 0, 1 et 20% en poids dudit amidon relatif à la masse totale de matière sèche du mélange, préférentiellement entre 0,1 et 10%, par exemple entre 0,20 et 9%, ou encore entre 0,30 et 7,50%, ou encore entre 0,40 et 7%, ou encore entre 0,50 et 6,50%, ou encore entre 0,60 et 6%, ou encore entre 0,80 et 5,50%, tout préférentiellement entre 1 et 5%.De préférence, le ratio massique entre l'agent sucrant et l'amidon prégélatinisé non modifié chimiquement est compris entre 4 et 10 000, de préférence entre 10 et 1000, tout préférentiellement entre 20 et 100.

De préférence, les constituants du mélange sont en poudre, la taille moyenne d50 de la poudre allant de 10 à 1000 µm, par exemple entre 100 et 800 µm.

Préférentiellement, les amidons prégélatinisés non modifiés chimiquement sont les seuls agents liants du sirop de dragéification.

Un troisième objet de l'invention concerne un procédé d'obtention par dragéification dure d'un revêtement cristallin dur autour d'un noyau, le procédé comprenant les étapes suivantes :
- préparation d'un sirop de dragéification en mélangeant au moins un agent sucrant et au moins un amidon prégélatinisé non modifié chimiquement avec un solvant,
- création à la surface du noyau d'un revêtement cristallin dur par au moins une application dudit sirop de dragéification,

ledit amidon n'ayant pas subi de modifications chimiques,
ledit revêtement et ledit sirop ainsi préparé étant exempt de dioxyde de titane, et dans lequel ledit revêtement et ledit sirop comprennent :
   - entre 80 et 99,90% en poids dudit agent sucrant relatif à la masse totale de matière sèche du mélange, préférentiellement entre 90 et 99,90% et - entre 0,1 et 20% en poids dudit amidon relatif à la masse totale de matière sèche du mélange, préférentiellement entre 0,1 et 10%.

Ledit amidon n'a donc pas subi de modifications chimiques telles que l'oxydation ou le greffage chimique

De préférence, le solvant utilisé pour la préparation du sirop de dragéification est l'eau.

De préférence, le revêtement obtenu ou ledit sirop ainsi préparé comprennent moins de 1 % en poids de gomme arabique relatif au poids total sec du revêtement ou du mélange, de préférence comprennent moins de 0,5 % en poids de gomme arabique relatif au poids total sec du revêtement ou du mélange ledit revêtement ou ledit mélange, de préférence encore, ledit revêtement ou ledit mélange étant exempt de gomme arabique.

De préférence, le revêtement obtenu ou ledit sirop ainsi préparé sont exempts de polysorbate, voire d'agents émulsifiants.

De préférence, le revêtement obtenu ou ledit sirop ainsi préparé comprennent moins de 1,5%, par exemple moins de 0,5 % en poids de dioxyde de titane relatif au poids total sec dudit revêtement ou dudit sirop, de préférence moins de 0,1 % en poids de dioxyde de titane relatif au poids total sec dudit revêtement ou dudit sirop, de préférence encore, ledit revêtement ou ledit mélange est exempt de dioxyde de titane (TiO₂).

De préférence, l'amidon prégélatinisé employé est obtenu par une prégélatinisation, telle que décrite ci-dessus.

De préférence, l'amidon prégélatinisé non modifié chimiquement présente une viscosité allant de 0,001 à 0,30 Pa.s, avantageusement de 0,02 à 0,25 Pa.s, préférentiellement de 0,04 à 0,20 Pa.s, mesurée selon un test B, le test B consistant à mesurer la viscosité, déterminée à une fréquence de 10 s-1 et à 20°C, d'une solution aqueuse à 5% en masse d'amidon prégélatinisé.

De préférence, l'amidon prégélatinisé non modifié chimiquement est un amidon natif.

Le revêtement peut être choisi parmi un revêtement avec sucre ou sans sucre, tel que décrit précédemment.

De préférence, l'agent agent sucrant est un polyol.

De préférence, le polyol est choisi parmi le sorbitol, le mannitol, le maltitol, le xylitol, l'isomalt, l'érythritol et le lactitol ou un mélange de ceux-ci, de préférence le maltitol ou le xylitol.

De préférence, l'amidon prégélatinisé non modifié chimiquement est choisi parmi l'amidon de pois prégélatinisé non modifié chimiquement, l'amidon de maïs prégélatinisé non modifié chimiquement ou l'amidon maïs cireux prégélatinisé non modifié chimiquement.

De préférence, le sirop de dragéification comprend de 30% à 85% en poids de matière sèche par rapport au poids total du sirop.

De préférence, les constituants du mélange sont en poudre, la taille moyenne d50 de la poudre allant de 10 à 1000 µm, par exemple entre 100 et 800 µm.

Le sirop de dragéification peut présenter un taux de matière sèche qui varie selon l'étape de constitution du revêtement cristallin dur (lissage, grossissage etc...) et également de la nature des constituants choisis. Il est réalisé de manière à pouvoir appliquer facilement le sirop lors du procédé. La matière sèche de la solution est généralement entre 30 et 85%, avantageusement entre 60 et 80%. De préférence, le taux de matière sèche est compris entre 65-80% en poids de matière sèche par rapport au poids total du sirop, dans le cas d'un sirop de grossissage ou compris entre 60 et 70% en poids de matière sèche par rapport au poids total du sirop, dans le cas d'un sirop de lissage.

Dans les procédés classiques, la préparation du sirop se fait généralement en deux étapes :

### La préparation de l'agent liant.

Généralement une solution est préparée au préalable pour faciliter l'hydratation de l'amidon. Cette solution d'amidon peut avoir une matière sèche allant de 10 à 25%, par exemple de l'ordre de 20%.

De préférence, la solution obtenue est transparente et non colorée.

### La dissolution de ou des agents de charge.

Dans une autre cuve, il faut introduire la quantité d'eau nécessaire et ajouter l'agent sucrant (le polyol).

Il est nécessaire ensuite de chauffer jusqu'à totale dissolution de la matière. La température finale du sirop est fonction de la matière sèche désirée, de la solubilité du ou des composants et de la viscosité maximum pour assurer une utilisation sans risque de cristallisation. Par exemple, pour un sirop de maltitol à 70% de matière sèche, la température d'utilisation est généralement de 70°C.

### La constitution du sirop final.

Les deux solutions sont ensuite réunies. Le taux de matière sèche est ajusté si nécessaire. D'autres composants pourront être additionnés dans la solution finale ou des une des solutions précédentes tels que des colorants poudre ou liquide, de l'édulcorant intense, des anti-moussants, des arômes, des minéraux, des agents blanchissants.

De préférence, le sirop de dragéification est préparé à une température inférieure à 100°C, de préférence inférieure à 80°C.

Une température inférieure à 100°C, de préférence inférieure à 80°C permet donc de dissoudre l'agent sucrant.

L'amidon prégélatinisé non modifié chimiquement employé selon l'invention peut être dissous à froid, c'est-à-dire à une température environ inférieure à 40°C, voire encore à une température inférieure à 30°C, par exemple à température ambiante.

De préférence, le solvant est l'eau.

Ainsi, le sirop de dragéification peut être préparé en une seule étape en obtenant un mélange sec à partir de l'agent sucrant et de l'amidon prégélatinisé non modifié chimiquement, en rajoutant le solvant et en chauffant jusqu'à la dissolution de l'agent sucrant. De même, d'autres composants pourront être additionné dans la solution finale ou des une des solutions précédentes tels que des colorants poudre ou liquide, de l'édulcorant intense, des anti-moussants, des arômes, des minéraux, des agents blanchissants.

La préparation d'un sirop de dragéification à base d'amidon prégélatinisé non modifié chimiquement est donc rendue plus simple grâce à la solubilité plus importante dudit amidon dans l'eau comparée à d'autres agents liants.

Par exemple, la préparation d'un sirop à base d'amidon natif non prégélatinisé nécessiterait une cuisson préalable à une température au-delà de 100°C.

Quant à la gomme arabique, elle ne se dissout pas facilement et il est donc très difficile de faire le mélange des poudres d'agent sucrant, tel que le polyol ou le sucre, et de gomme arabique avant le chauffage. Il faudrait alors chauffer jusqu'à la dissolution complète de l'agent sucrant dans l'eau, ensuite ajouter la solution aqueuse de gomme arabique préalablement préparé, sa préparation nécessitant un temps d'agitation et un temps de repos pour débuller supplémentaire par rapport à la solution à base d'amidon prégélatinisé non modifié chimiquement.

Ainsi, de préférence, le polyol est sous forme de poudre et le sirop de dragéification est préparé en mélangeant le polyol, l'amidon prégélatinisé non modifié chimiquement avec le solvant, le mélange étant ensuite chauffé.

De préférence, le sirop de dragéification présente une viscosité entre 0,1 et 5 Pa.s mesurée selon le Test A à 20°C, préférentiellement entre 0,5 et 3 Pa.s.

De préférence, le sirop de dragéification présente une viscosité entre 0,02 et 0,7 Pa.s mesurée selon le Test A à 70°C, préférentiellement entre 0,04 et 0,6 Pa.s.

Les conditions pouvant être utilisées pour réaliser le Test A sont indiqué dans la partie Méthode de mesure et matériel.

De préférence, ledit sirop comprend :
- entre 80 et 99,90% en poids dudit agent sucrant relatif à la masse totale de matière sèche du sirop, préférentiellement entre 90 et 99,90%, par exemple entre 91 et 99,80%, ou encore entre 92,50 et 99,70%, ou encore entre 93 et 99,60%, ou encore entre 93,50 et 99,50%, ou encore entre 94 et 99,40%, ou encore entre 94,50 et 99,20%, tout préférentiellement entre 95 et 99% et
- entre 0, 1 et 20% en poids dudit amidon relatif à la masse totale de matière sèche du sirop, préférentiellement entre 0,1 et 10%, par exemple entre 0,20 et 9%, ou encore entre 0,30 et 7,50%, ou encore entre 0,40 et 7%, ou encore entre 0,50 et 6,50%, ou encore entre 0,60 et 6%, ou encore entre 0,80 et 5,50%, tout préférentiellement entre 1 et 5%.De préférence, le ratio massique entre l'agent sucrant et l'amidon prégélatinisé non modifié chimiquement est compris entre 4 et 10 000, de préférence entre 10 et 1000, tout préférentiellement entre 20 et 100. Le revêtement cristallin dur peut également contenir des ingrédients tels que des agents aromatisants, des édulcorants artificiels, des agents dispersants et émulsifiants, des agents colorants, des agents blanchissants, des agents filmogènes et des agents liants. Les agents aromatisants envisagés comprennent ceux couramment connus dans la technique tels que les huiles essentielles, les arômes synthétiques ou leurs mélanges, y compris, mais sans s'y limiter, les huiles dérivées de plantes et de fruits telles que les huiles d'agrumes, les essences de fruits, l'huile de menthe poivrée, huile de menthe verte, autres huiles de menthe, huile de clou de girofle, huile de gaulthérie, anis et similaires. Les agents aromatisants peuvent également être ajoutés au sirop d'enrobage en une quantité telle que l'enrobage contienne environ 0,2% à environ 3,0% en poids dudit agent aromatisant relatif à la masse totale de matière sèche du sirop.

Les agents aromatisants peuvent être ajoutés avant, pendant et après l'application du sirop sur les noyaux. Une fois que le revêtement a séché pour former une surface dure, des ajouts de sirop supplémentaires peuvent être effectués pour produire une pluralité de revêtements ou plusieurs couches de revêtement dur.

Les édulcorants artificiels ou naturel, en particulier les édulcorants à haute intensité, envisagés pour une utilisation dans le revêtement comprennent, mais sans s'y limiter, les substances synthétiques, la saccharine, la thaumatine, l'alitame, les sels de saccharine, l'aspartame, le sucralose et l'acésulfame K. L'édulcorant artificiel peut être ajouté à l'enrobage de sirop en une quantité telle que l'enrobage contienne d'environ 0,01% à environ 1,0% et typiquement d'environ 0,10% à environ 0,5%, en poids dudit édulcorant artificiel relatif à la masse totale de matière sèche du sirop et de même pour l'agent édulcorant naturel tel que la Stévia.

Des agents blanchissants sont souvent ajoutés au sirop de dragéification dans le but de blanchir et de réduire le collant. Il peut s'agir des sucro-esters ou tout autre composé anti-adhérent. Le sucro-ester peut augmenter la blancheur ou la vitesse de cristallisation, par exemple.

L'agent blanchissant peut-être ajouté au sirop de dragéification en une quantité telle que ledit sirop contienne environ 0,05% à environ 1,0%, et typiquement environ 0,3% à environ 0,6% en poids dudit agent relatif à la masse totale de matière sèche du sirop.

Des colorants peuvent être ajoutés directement au sirop d'enrobage sous forme de colorant ou de laque. Les colorants peuvent être des charges minérales qui peuvent être le dioxyde de titane et le talc ou des composants organiques tels que amidons natifs par exemple l'amidon de riz. Les agents colorants envisagés par la présente invention comprennent des colorants de qualité alimentaire. La présente invention exclut préférentiellement le dioxyde de titane, voire toute charge minérale, voire tout agent colorant additionnel. Ces quantités vont varier selon le type de colorants. En ce qui concerne les charges minérales, on peut en utiliser jusqu'à 5% en poids relatif à la masse totale de matière sèche du sirop. En ce qui concerne les composants organiques, on peut en utiliser jusqu'à 10% en poids relatif à la masse totale de matière sèche du sirop. Selon une variante, le mélange comprend moins de 3% en poids d'amidon natif, par exemple moins de 1% ou encore le mélange est exempt d'amidon natif.

Il existe plusieurs phases à suivre pour réaliser une dragéification traditionnelle. La dragéification traditionnelle se réalise dans une turbine de dragéification qui tourne en permanence. Ce procédé se déroule en plusieurs étapes répétitives, comme décrites par la suite.

### Initialisation de la dragéification

Durant cette première phase, le but est de démarrer le phénomène de cristallisation. Tout d'abord, il va falloir humidifier les centres avec du sirop composé de 60% à 80% de matière sèche et d'eau. La viscosité du sirop est déterminante et limite sa matière sèche. Le sirop doit pouvoir être versé de manière homogène sur les centres. De plus, si le sirop est trop visqueux, cela augmenterait le risque de collage des centres les uns aux autres ou à la turbine.

Le sirop inséré doit donc réussir à cristalliser donc à sécher (s'il y a cristallisation, l'eau libérée peut s'évaporer). Une vérification à main nue est réalisée afin de ressentir à l'aide de faibles pressions de centres dans la main si ceux-ci sont encore humides ou non. (Cette manipulation est faite uniquement lors de la mise au point de protocole de dragéification).

Lors de cette insertion de sirop, l'autre risque existant est celui du collage des centres les uns aux autres ou à la turbine. Une vérification sera aussi faite en ce sens en prélevant des poignées de centres et en décollant si besoin le maximum de doubles existants, ou en décollant les centres de la surface de la turbine.

En général, le processus de revêtement est effectué dans une turbine rotative. Les centres à enrober ou à casser sont placés dans la turbine rotative pour former une masse mobile.

### Grossissement

Le but est d'appliquer des quantités de sirop maximales possible donc le moins de couches possibles. La taille des produits augmentant, il est nécessaire d'augmenter petit à petit la quantité de sirop à verser dans la turbine afin d'enrober tous les centres de manière homogène.

Lors de cette phase, un des risques est de ne pas réussir à englober entièrement les centres de sirop. Les parties planes se recouvriront facilement alors que les coins ou petites arêtes peuvent être plus difficiles à recouvrir. Afin de recouvrir ces arêtes et donc d'avoir une dragéification uniforme, il est nécessaire d'avoir un sirop le moins visqueux possible afin qu'il puisse s'insérer dans les différents interstices pouvant exister.

Lors de la phase de grossissement, une insertion d'arôme liquide peut être effectuée afin de renforcer le goût d'un produit dragéifié, tel qu'un chewing-gum.

Durant le grossissement, une vérification sur le collage sera aussi effectuée afin d'éviter les doublons qui risqueraient, si pas décollés suffisamment tôt, de casser la surface cristalline créée.

Les noyaux à revêtir sont soumis à un turbinage c'est à dire un mouvement de rotation dans une turbine de dragéification. Celle-ci peut avoir une forme ordinaire, c'est à dire une forme en tulipe avec un axe de révolution incliné ou bien une forme cylindrique avec un axe horizontal. Les noyaux, de préférence dépoussiérés antérieurement ou postérieurement à leur introduction dans la turbine, présentent de préférence une forme sphérique, cylindrique ou ovale afin de faciliter l'opération d'enrobage mais peuvent tout aussi bien avoir une forme en coussinet.

Ensuite, une étape de pause est nécessaire. Durant cette étape, la turbine continue de tourner et le sirop préalablement versé va se disperser sur toute la surface des chewing-gums.

Au fur et à mesure du grossissement, il peut être observé que la surface de dragéification reste rugueuse. Or, il est nécessaire d'ajouter une cire en fin de procédé afin de rendre le centre brillant. Cette phase de cirage n'est pas possible si la surface de nos centres est rugueuse car seulement certaines parties du produit brilleraient et cela donnerait un mauvais rendu. Pour cela, une phase de lissage est essentielle après le grossissage.

### Lissage

Lors de cette phase, la surface de notre chewing-gum est rendue lisse. Cette étape va se réaliser en introduisant de petites quantités de sirop dans la turbine. Le sirop, en petite quantité, va aplanir la surface de nos chewing-gums, le temps de pause sera lui plus important afin de permettre aux chewing-gums de se frotter les uns aux autres et donc de s'éroder afin de lisser leur surface.

Il faudra là aussi vérifier qu'il n'y a pas de doublons dus à du collage.

### Polissage

Cette dernière phase consiste à donner à notre dragéification de chewing-gum un aspect brillant. De la cire en poudre va donc être insérée (en très petite quantité) afin d'avoir un aspect poli.

Lorsque la cire a bien été répartie sur les centres, la turbine et le séchage seront arrêtés afin de laisser les chewing-gums sécher à l'air libre et d'éviter qu'ils ne s'entrechoquent de trop ce qui pourrait les abimer (détériorer voire casser la couche dragéifiée).

Lorsque la dragéification est terminée, il faudra (en fonction du sirop utilisé) avoir une étape d'attente avant le packaging afin que la cristallisation se finisse et avoir un maximum de croustillance pour notre chewing-gum (jusqu'à deux jours si séchage à l'air libre).

Enfin, l'étape de séchage, facultative mais souhaitable notamment lorsque le polyol est le xylitol, s'en suit. Le séchage peut être réalisé à l'intérieur de la turbine de dragéification ou dans des containers perforés par soufflage d'un air sec et chaud ou en dehors de celle-ci par exemple en plaçant les noyaux revêtus du mélange semi-cristallin dans une chambre d'étuvage. Cette étape vise à évaporer l'eau présente dans le sirop permettre et la cristallisation plus complète du polyol. Au lieu de procéder à cette étape, il est également possible de laisser évoluer naturellement le revêtement semi-cristallin vers un état cristallin.

L'homme du métier saura régler la température de l'air afin d'éviter qu'un air trop chaud déforme les centres.

Des agents aromatisants peuvent être ajoutés avant, pendant et après l'application du sirop sur les centres. Une fois que le revêtement a séché pour former une surface dure, des ajouts de sirop supplémentaires peuvent être effectués pour produire une pluralité de revêtements ou plusieurs couches de revêtement dur.

Le sirop à appliquer sur les centres à une température entre 20 et 100°C, de préférence entre 40 et 80°C tout au long du processus d'enrobage afin d'empêcher le polyol ou le sucre de cristalliser dans la cuve ou tuyauterie. Le sirop peut être mélangé, pulvérisé, versé ou ajouté aux centres de toute manière connue de l'homme du métier.

En général, pour obtenir une pluralité de couches, des couches uniques de sirop sont appliquées, permettant aux couches de sécher, puis répétant le processus. La quantité de solides ajoutés par chaque étape d'enrobage dépend principalement de la concentration du sirop d'enrobage. N'importe quel nombre de couches peut être appliqué sur les centres. De préférence, pas plus d'environ 75 couches sont appliquées aux centres. En règle générale, environ 30 à environ 60 couches sont appliquées. Dans tous les cas, la présente invention envisage d'appliquer une quantité de sirop suffisante pour donner un chewing-gum enrobé ou comestible contenant environ 10% à environ 65% d'enrobage. De préférence, le produit final contiendra d'environ 20% à environ 50% de revêtement.

Le sirop de dragéification est appliqué sur les noyaux sous forme de liquide chaud, le sucre ou le polyol laissé cristalliser, puis l'enrobage est séché à l'air sec. Une quantité de poudre ou mix de poudre peuvent être ajouté sur certaines couches afin soit d'amorcer la cristallisation, soit d'apporter de la blancheur, soit pour gagner du poids plus rapidement, ou tout autres raisons.

Un arôme est appliqué avec une, deux, trois ou même quatre ou plus de ces applications de revêtement. Chaque fois que de l'arôme est ajouté, plusieurs revêtements non aromatisés sont appliqués pour couvrir l'arôme avant d'appliquer la couche d'arôme suivante. Cela réduit la volatilisation de l'arôme pendant le processus d'enrobage.

Quant à la teneur en eau, il est préférable, grâce au séchage final, qu'elle soit abaissée à une valeur inférieure à 1,5 %, de préférence inférieure à 1,0 %, et plus préférentiellement inférieure à 0,5 %.

Une étape d'ensemencement peut être ajoutée si besoin en fonction du sirop utilisé avant le séchage afin d'initier la cristallisation. De même, l'ajout d'arômes liquides peut se faire au niveau des derniers cycles de dragéification si voulu. Finalement, une dernière étape de polissage/vernissage peut être faite afin d'avoir un produit final à l'aspect brillant.

Comme indiqué précédemment, la composition des sirops de dragéification peut être différente selon l'emplacement des couches de dragéification au sein du revêtement cristallin dur (couches intérieures, intermédiaires ou extérieures).

De préférence, lors de la dragéification, le même sirop est employé tout au long du procédé, ledit sirop pouvant être dilué avec du solvant au cours des cycles.

Préférentiellement, les amidons prégélatinisés non modifiés chimiquement sont les seuls agents liants du sirop de dragéification.

Un autre objet, qui ne fait pas partie de la présente invention, concerne un produit de confiserie dragéifié obtenu par un procédé tel que décrit précédemment.

Un quatrième objet de l'invention concerne une composition pré-mélangée sèche de dragéification comprenant un mélange d'au moins un agent sucrant et d'au moins un amidon prégélatinisé non modifié chimiquement, ledit amidon n'ayant pas subi de modifications chimiques,
ladite composition étant exempte de dioxyde de titane, caractérisée en ce que la composition comprend :
- entre 80 et 99,90% en poids dudit agent sucrant relatif à la masse totale de matière sèche de la composition, préférentiellement entre 90 et 99,90 %, tout préférentiellement entre 95 et 99% et
- entre 0, 1 et 20% en poids dudit amidon relatif à la masse totale de matière sèche de la composition, préférentiellement entre 0,1 et 10%, tout préférentiellement entre 1 et 5%.

Ledit amidon n'a donc pas subi de modifications chimiques telles que l'oxydation ou le greffage chimique

Une telle composition pré-mélangée présente une pluralité d'avantages : celui d'être prêt à l'emploi et donc de permettre de ce fait des gains de temps considérables et donc des gains de productivité importants, celui d'être simple à utiliser et à mettre en place industriellement, celui de permettre une reproductibilité des procédés au cours du temps, celui de permettre la préparation de produits dragéifiés de très haute qualité, non collants et n'évoluant pas en aspect ou en texture de manière significative au cours du temps.

De préférence, l'amidon prégélatinisé employé est obtenu par une prégélatinisation, telle que décrite ci-dessus.

De préférence, la composition comprend moins de 1 % en poids de gomme arabique relatif au poids total sec du revêtement ou du mélange, de préférence comprennent moins de 0,5 % en poids de gomme arabique relatif au poids total sec du revêtement ou du mélange ledit revêtement ou ledit mélange, de préférence encore, ledit revêtement ou ledit mélange étant exempt de gomme arabique.

De préférence, le revêtement obtenu ou ladite composition ainsi préparés sont exempts de polysorbate, voire d'agents émulsifiants.

De préférence, le revêtement obtenu ou ladite composition moins de 1,5%, par exemple moins de 0,5 % en poids de dioxyde de titane relatif au poids total sec dudit revêtement ou ladite composition, de préférence moins de 0,1 % en poids de dioxyde de titane relatif au poids total sec dudit revêtement ou ladite composition, de préférence encore, ledit revêtement ou ledit mélange est exempt de dioxyde de titane (TiO₂).

Ladite composition comprend :
- entre 80 et 99,90% en poids dudit agent sucrant relatif à la masse totale de matière sèche de la composition, préférentiellement entre 90 et 99,90%, par exemple entre 91 et 99,80%, ou encore entre 92,50 et 99,70%, ou encore entre 93 et 99,60%, ou encore entre 93,50 et 99,50%, ou encore entre 94 et 99,40%, ou encore entre 94,50 et 99,20%, tout préférentiellement entre 95 et 99% et
- entre 0, 1 et 20% en poids dudit amidon relatif à la masse totale de matière sèche de la composition, préférentiellement entre 0,1 et 10%, par exemple entre 0,20 et 9%, ou encore entre 0,30 et 7,50%, ou encore entre 0,40 et 7%, ou encore entre 0,50 et 6,50%, ou encore entre 0,60 et 6%, ou encore entre 0,80 et 5,50%, tout préférentiellement entre 1 et 5%.De préférence, le ratio massique entre l'agent sucrant et l'amidon prégélatinisé non modifié chimiquement est compris entre 4 et 10 000, de préférence entre 10 et 1000, tout préférentiellement entre 20 et 100. De préférence, la composition peut comprendre en plus des ingrédients tels que des agents aromatisants, des édulcorants artificiels, des agents dispersants et émulsifiants, des agents colorants, des agents blanchissants, des agents filmogènes et des agents liants, tels que décrits précédemment.

De préférence, l'amidon prégélatinisé non modifié chimiquement présente une viscosité allant de 0,001 à 0,30 Pa.s, avantageusement de 0,02 à 0,25 Pa.s, préférentiellement de 0,04 à 0,20 Pa.s, mesurée selon un test B, le test B consistant à mesurer la viscosité, déterminée à une fréquence de 10 s-1 et à 20°C, d'une solution aqueuse à 5% en masse d'amidon prégélatinisé.

De préférence, l'amidon prégélatinisé non modifié chimiquement est un amidon natif prégélatinisé.

De préférence, l'agent sucrant est un polyol.

De préférence, le polyol est choisi parmi le sorbitol, le mannitol, le maltitol, le xylitol, l'isomalt, l'érythritol et le lactitol ou un mélange de ceux-ci, de préférence le maltitol ou le xylitol.

De préférence, l'amidon prégélatinisé non modifié chimiquement est choisi parmi l'amidon de pois prégélatinisé non modifié chimiquement, l'amidon de maïs prégélatinisé non modifié chimiquement ou l'amidon maïs cireux prégélatinisé non modifié chimiquement.

De préférence, l'agent sucrant est un sucre choisi parmi saccharose et dextrose, galactose.

Ainsi, dans le cas d'une composition sans sucre, l'agent sucrant est notamment un polyol pouvant être choisi parmi le sorbitol, le mannitol, le maltitol, le xylitol, l'isomalt, l'érythritol et le lactitol, préférentiellement le maltitol, l'isomalt et le xylitol, plus préférentiellement le maltitol, le xylitol, tout préférentiellement le maltitol.

Par ailleurs, un agent sucrant formant ledit mélange peut être choisi parmi au moins un sucre ou au moins un polyol ou un mélange de ceux-ci.

Dans le cas d'une composition avec sucre, l'agent sucrant peut notamment être un sucre choisi parmi le saccharose, le dextrose, l'isomaltulose (palatinose), le maltose et le galactose, de préférence, le saccharose, le dextrose ou le galactose, tout préférentiellement le saccharose.

Alternativement, dans le cas d'une composition avec sucre, le mélange peut comprendre au moins deux agents sucrants choisis parmi au moins un sucre et au moins un polyol, ledit sucre étant choisi parmi le saccharose, le dextrose, l'isomaltulose (palatinose), le maltose et le galactose, de préférence, le saccharose, le dextrose ou le galactose et ledit polyol étant choisi parmi le sorbitol, le mannitol, le maltitol, le xylitol, l'isomalt, l'érythritol et le lactitol, préférentiellement le maltitol, l'isomalt et le xylitol, plus préférentiellement le maltitol, le xylitol, tout préférentiellement le maltitol.

De préférence, la taille moyenne d50 de la poudre va de 10 à 1000 µm, par exemple entre 100 et 800 µm.

Préférentiellement, les amidons prégélatinisés non modifiés chimiquement sont les seuls agents liants du sirop de dragéification.

De préférence, une telle composition est adaptée lors de la préparation d'un sirop de dragéification dans le cadre d'un procédé tel que décrit précédemment.

Un autre objet, qui ne fait pas partie de la présente invention, concerne un produit de confiserie dragéifié obtenu par un procédé tel que décrit précédemment.

### Méthode de mesure et matériel

### Viscosité

Viscosité des sirops de dragéification

La mesure de la viscosité selon le test A peut être réalisée sur un rhéomètre MCR301 d'Anton Paar équipé de Cylindres concentriques CC27. Un cisaillement de 0 à 50 s⁻¹ en 3 minutes (rampe linéaire) est appliqué à des températures de 80, 70, 60, 50, 40, 30, 20°C régulées par Peltier.

### Blancheur

La mesure de l'indice de blancheur a été effectuée sur un spectrophotomètre commercialisé par Konica Minolta (CM-5) avec les conditions suivantes :
- mode de mesure : Réflexion
- ouverture : / SCI (réflexion spéculaire incluse)
- L*a*b CMC (espace couleur) / WI ASTM E313-96 (indice couleur)
- 10° (observateur) / D65 (illuminant 1) / aucun (illuminant 2).

### Dureté

La mesure de dureté des chewing-gums est effectuée à 20 °C à l'aide d'un texturomètre INSTRON machine 5966 commercialisé par la société INSTRON en suivant le protocole suivant:
Cellule de mesure : 100N
Géométrie - Poinçon cône (cassé) ayant une base de 40 mm et une hauteur de 38 mm.
Méthode - Vitesse de traverse : 1,5 mm/min
Déformation imposée : 1,5 mm d'enfoncement

### Pré-charge de 2,5 N à 5 mm/min

Les échantillons de chewing-gum ont environ 21 mm de longueur, 7 mm de largeur, 3 mm d'épaisseur.

On enregistre la force en newtons, et la valeur retenue est le maximum de force, sachant que l'évaluation s'arrête lorsqu'une chute de 0.1N est constatée dans la mesure de la force. La dureté du chewing-gum est caractérisée à l'état refroidi à 20 °C.

La dureté ainsi mesurée correspond à la force nécessaire pour obtenir la première cassure du revêtement.

### Croustillance

La croustillance correspond, quant à elle, au nombre de cassures du revêtement obtenu pour une pénétration imposée du poinçon utilisé.

La mesure de croustillance des chewing-gums est effectuée à 20 °C à l'aide d'un texturomètre INSTRON machine 5966 commercialisé par la société INSTRON en suivant le protocole suivant:
Cellule de mesure : 100N
Géométrie - Poinçon Cône (cassé) ayant une base de 40 mm et une hauteur de 38 mm.
Méthode - Vitesse de traverse : 1,5 mm/min
Déformation imposée : 1,5 mm d'enfoncement

### Pré-charge de 2,5 N à 5 mm/min

Résistance au choc (en anglais « *chippinq »)*

50 produits dragéifiés sont laissés en chute libre depuis une hauteur d'un mètre. Le pourcentage correspondant au nombre de produits présentant des coins endommagés par rapport aux 50 produits dragéifiés est ainsi calculé.

### Uniformité de la couleur

L'uniformité de la couleur est évaluée par l'opérateur en la classant de la manière suivante :
- : très mauvaise
- : mauvaise
0 : passable
+ : bonne
++ : très bonne

### Préparation des sirops

Les sirops analysés sont obtenus à base d'un mélange d'un agent liant selon l'invention ou selon l'art antérieur présent au taux indiqué en poids sec par rapport au poids total de matière sèche dudit sirop et/ou d'un polyol présent au taux indiqué en poids sec par rapport au poids total de matière sèche dudit sirop dans l'eau comme suit.

Pour les exemples illustratifs présentés ci-dessous les composés suivants ont été utilisés :
Polyols en poudre
   Maltitol poudre : Sweetpearl^{®} P200 (Roquette^{®})
   Maltitol poudre : Sweetpearl^{®} P35 (Roquette^{®})
   Xylitol poudre : Xylisorb^{®} 300 (Roquette^{®})
Liants
   Gomme arabique dure : Quick Gum Type 8074RD - NOREVO
   Amidon prégélatinisé de maïs cireux non modifié : Pregeflo^{®} C100 (Roquette^{®})
   Amidon prégélatinisé de pois non modifié : Pregeflo^{®} L100G (Roquette^{®})
   Amidon prégélatinisé de maïs non modifié : Pregeflo^{®} M (Roquette^{®})
   Dextrine de tapioca : CLEARGUM^{®} TA 90 (Roquette^{®})
   Amidon de maïs cireux modifié octényle succinate : CLEARGUM^{®} CO 03 (Roquette^{®})
   Amidon prégélatinisé de pois hydroxypropylé : LYCOAT^{®} RS 780 (Roquette^{®})
   Maltodextrine de pois : KLEPTOSE^{®} LINECAPS (Roquette^{®})
   Pectine : Genu^{®} Pectin (CPKelco)
   Substitut de gomme arabique commercial (hydrocolloïdes) : TicaPAN^{®} 311 (TIC gums)
Maltitol liquide
   Sirop de maltitol non cristallisable à 73% de matière sèche : Lycasin^{®} HBC (Roquette^{®})

### Exemples

Dans les exemples ci-dessous, seulement les exemples correspondant aux revendications sont considérés comme faisant partie de la présente invention.

### EXEMPLE 1 - Fabrication de chewing gums dragéifiés

### Préparation des sirops de dragéification à base de maltitol (pour une dragéification dans une turbine de 8 kg)

### Préparation des solutions de liant

### Solution de gomme arabique :

Pour préparer la solution de dragéification à base de gomme arabique, on réalise une solution à 40% de matière sèche de gomme arabique en dispersant sous haute agitation la gomme arabique dans de l'eau à température ambiante et on laisse reposer pendant 12H afin de démousser la solution. Ce protocole permet de ne pas dégrader et colorer la gomme arabique.

### Solution des autres liants :

Pour préparer la solution de dragéification à base de liant autre que la gomme arabique, on réalise une solution à 20% de matière sèche de liant en plaçant le liant dans de l'eau (hormis pour la pectine où la solution est à 4% de matière sèche). La solution est chauffée à la température indiquée dans le tableau 1 de manière à dissoudre le liant dans la solution.

### Préparation des solutions de polyol à partir des polyols en poudre

### Solutions de maltitol

On prépare une solution de maltitol en solubilisant une quantité de maltitol poudre P200 définie permettant d'obtenir, après mélange avec les solutions de liants décrites ci-dessus, 70% de matière sèche dans la solution de dragéification. La solution de maltitol est maintenue à 70°C.

### Solutions de xylitol

On prépare une solution de xylitol en solubilisant une quantité de xylitol poudre définie permettant d'obtenir, après mélange avec les solutions de liants décrites ci-dessus, 75% de matière sèche dans la solution de dragéification. La solution de xylitol est maintenue à 70°C.

### Préparation des sirops de dragéification

Pour préparer les sirops de dragéification, on mélange les solutions de manière à obtenir la quantité désirée de liant. Les quantités de liant par rapport à la matière sèche totale de la solution de dragéification figure dans le Tableau A. En ce qui concerne l'essai avec le Lycasin HBC, le sirop de maltitol non cristallisable est ajouté en lieu et place du liant.

Les sirops de dragéification à base de maltitol présentent 70% de matière sèche et celles à base de xylitol présentent 75% de matière sèche dans la solution de dragéification.

Les sirops de dragéification sont mélangés et maintenues à 70°C avant utilisation.

### Viscosité

Les propriétés de viscosité des différentes solutions de dragéification (CP pour comparatives et I pour invention) mesurées selon le test A sont reprises dans le Tableau 1.

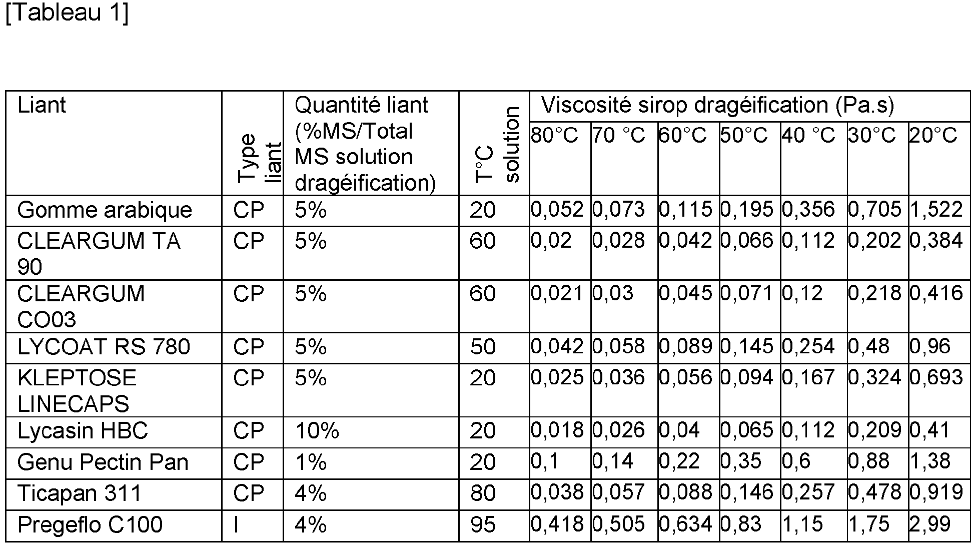

### Fabrication des chewing gum dragéifiés

On fabrique des chewing-gums dragéifiés de manière classique en plaçant 8 kg centres de chewing-gums dans une turbine de dragéification en cuivre manuelle de type Frogerais d'une capacité d'environ 30 kg de centres. La vitesse de la turbine est d'environ 18 tours par minute.

Dans la première séquence du procédé de dragéification, du maltitol poudre P35 est mis dans la turbine de dragéification. La solution de dragéification est appliquée tout le long du procédé sur les centres et les conditions de dragéification sont reportées, selon le type de liant, dans les tableaux 2 à 10 ci-dessous.

### Gomme arabique

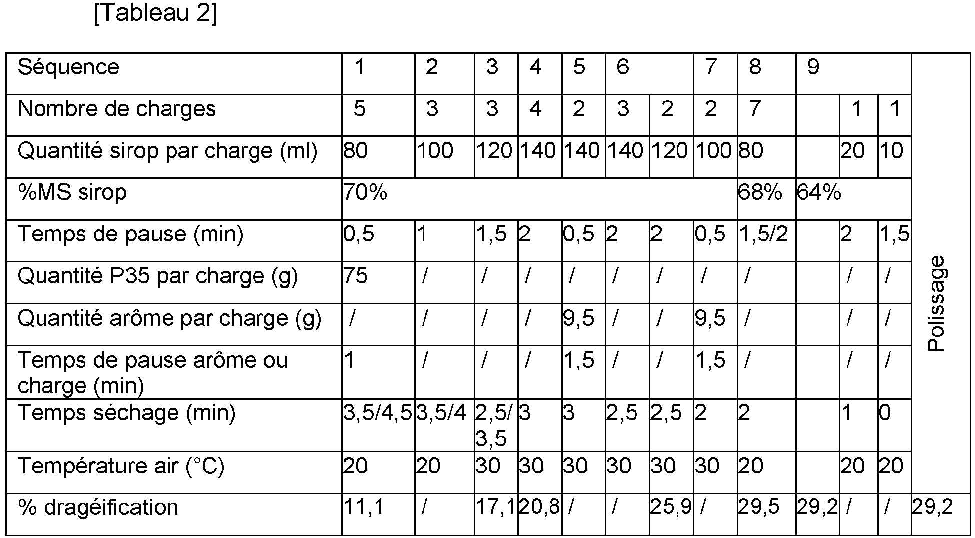

### CLEARGUM TA 90

**[Tableau 3]**

| | | | | | | | | | | | | | | |
|---|---|---|---|---|---|---|---|---|---|---|---|---|---|---|
| Séquence | | 1 | 2 | 3 | 4 | 5 | 6 | 7 | 8 | | 9 | | | |
| Nombre de charges | | 5 | 3 | 5 | 4 | 2 | 4 | 2 | 4 | 3 | 2 | 2 | 1 | |
| Quantité sirop par charge (ml) | | 80 | 100 | 120 | 140 | 140 | 140 | 100 | 90 | 80 | 50 | 20 | 10 | |
| %MS sirop | 70% | | | | | | | 68% | | 65% | | | | |
| Temps de pause (min) | 0,5 | 1 | 1,5 | 1,5 | 0,5 | 2 | 0,5 | 1,5 | 1,5 | 5 | | 2 | 1,5 | |
| Quantité P35 par charge (g) | 75 | / | / | / | / | / | / | / | / | / | | / | / | |
| Quantité arôme par charge (g) | / | / | / | / | 9,5 | / | 9,5 | / | / | / | | / | / | |
| Temps de pause arôme ou charge (min) | 1 | / | / | / | 1,5 | / | 1,5 | / | / | / | | / | / | |
| Temps séchage (min) | 4,5/6 | 6/5/4 | 3/2,5 | 3 | 3/2,5 | 3/2,5 | 3 | 1,5/2 | 2 | 1 | | 1 | 0 | |
| Température air (°C) | 20 | 30 | 30 | 30 | 30 | 30 | 30 | 20 | 20 | 20 | 2 0 | | 20 | |
| % dragéification | 8,7 | 10,7 | 15,6 | 20,2 | 21,3 | 25,2 | 25,3 | / | 29,2 | / | / | | / | 29,2 |

### CLEARGUM CO03

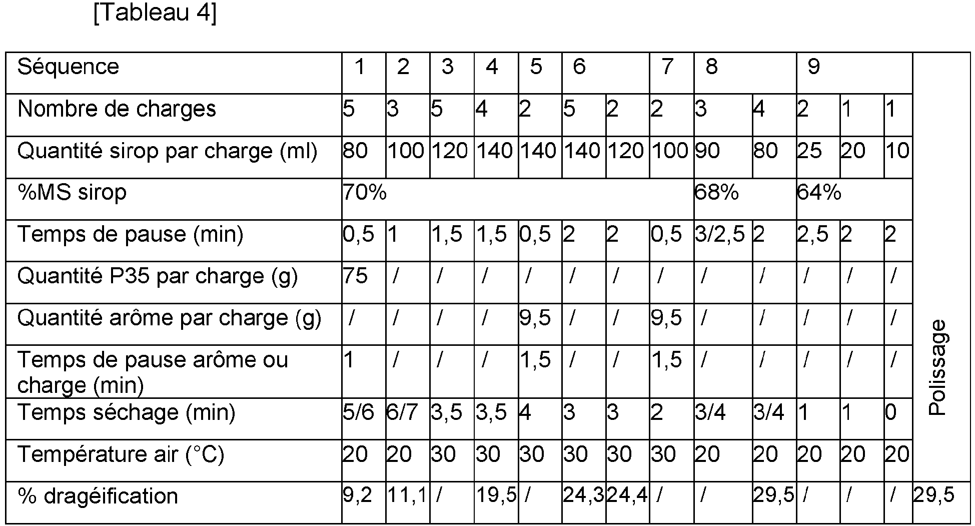

### LYCOAT RS 780

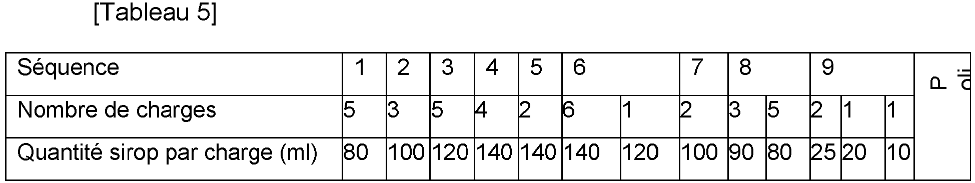

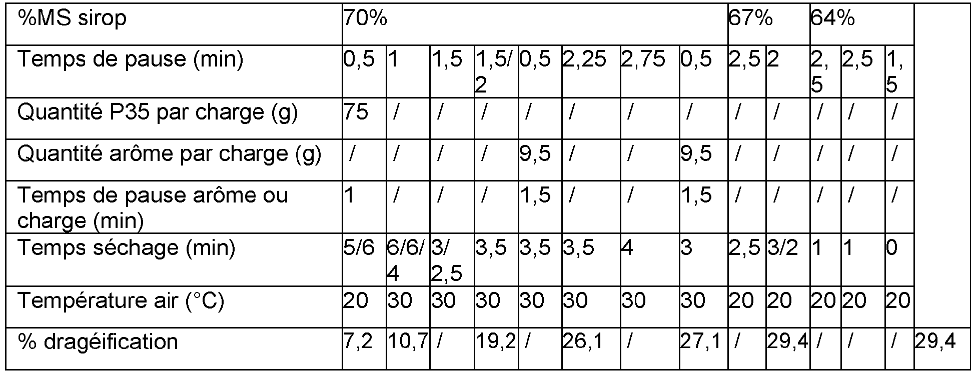

### KLEPTOSE LINECAPS

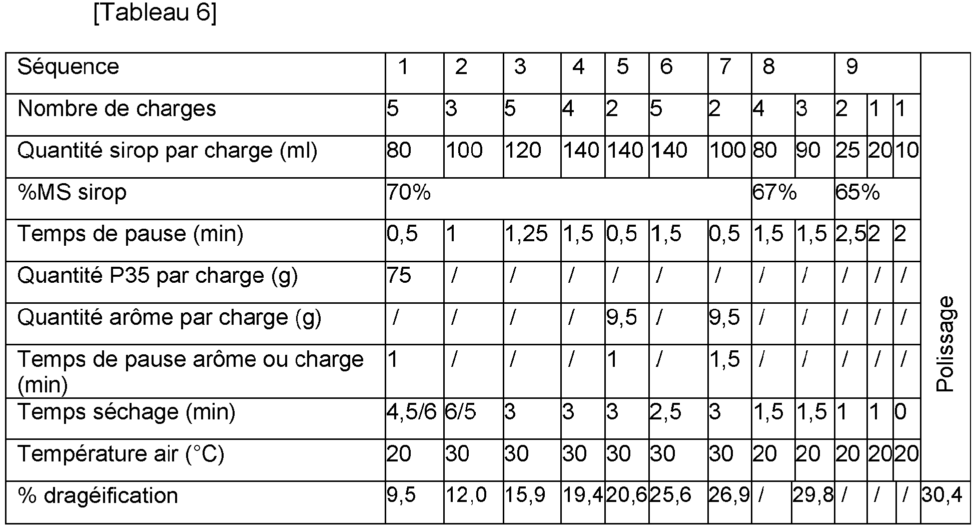

### Genu Pectin Pan

**[Tableau 7]**

| | | | | | | | | | | | | | |
|---|---|---|---|---|---|---|---|---|---|---|---|---|---|
| Séquence | 1 | 2 | 3 | 4 | 5 | 6 | 7 | 8 | | 9 | | | |
| Nombre de charges | 5 | 3 | 5 | 4 | 2 | 4 | 2 | 5 | 7 | 2 | 1 | 1 | |
| Quantité sirop par charge (ml) | 80 | 100 | 120 | 140 | 140 | 150 | 100 | 90 | 80 | 25 | 20 | 10 | |
| %MS sirop | 70% | | | | | | | | | | | | |
| Temps de pause (min) | 0,5 | 1 | 1,5 | 1,5 | 0,5 | 2,5 | 0,5 | 2/2,5 | 1,5 | 3,5/3 | 2,5 | 1,5 | |
| Quantité P35 par charge (g) | 75 | / | / | / | / | / | / | / | / | / | / | / | |
| Quantité arôme par charge (g) | / | / | / | / | 9,5 | / | 9,5 | / | / | / | / | / | |
| Temps de pause arôme ou charge (min) | 1 | / | / | / | 1,5 | / | 1,5 | / | / | / | / | / | |
| Temps séchage (min) | 5 | 5 | 3 | 3,5 | 3,5 | 2,5/3 | 4/3,5 | 2/3 | 3,5 | 1 | 1 | 0 | |
| Température air (°C) | 20 | 30 | 30 | 30 | 30 | 30 | 30 | 20 | 20 | 20 | 20 | 20 | |
| % dragéification | 9,2 | 10,6 | 15,6 | 19,4 | 21,1 | 24,4 | 25,0 | / | 29,3 | / | / | / | 29,3 |

### Lycasin HBC

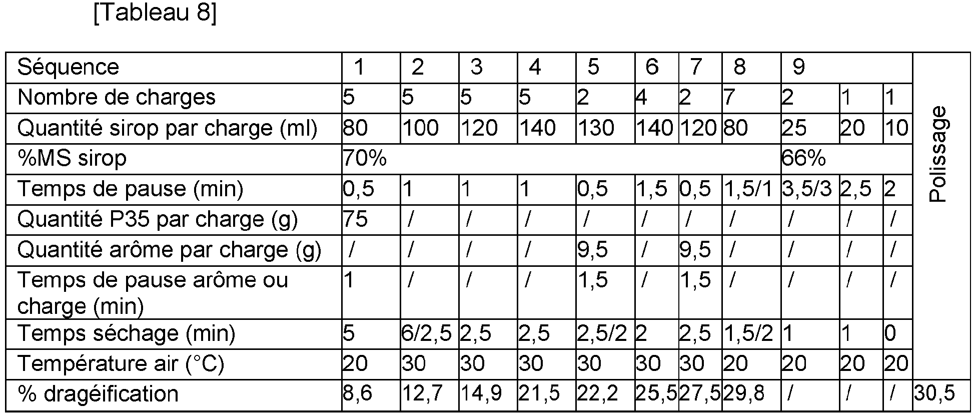

### Ticapan 311

**[Tableau 9]**

| | | | | | | | | | | | | | |
|---|---|---|---|---|---|---|---|---|---|---|---|---|---|
| Séquence | 1 | 2 | 3 | 4 | 5 | 6 | | 7 | 8 | 9 | | | |
| Nombre de charges | 5 | 3 | 5 | 5 | 2 | 4 | 2 | 2 | 7 | 2 | 1 | 1 | |
| Quantité sirop par charge (ml) | 80 | 100 | 120 | 140 | 140 | 140 | 120 | 100 | 80 | 25 | 20 | 10 | |
| %MS sirop | 70% | | | | | | | | 68% | 35% | | | |
| Temps de pause (min) | 0,5 | 1 | 1,5 | 1,5 | 0,5 | 2 | 1,5 | 0,5 | 1,75 | 3 | 2,5 | 1,5 | |
| Quantité P35 par charge (g) | 75 | / | / | / | / | / | / | / | / | / | / | / | |
| Quantité arôme par charge (g) | / | / | / | / | 9,5 | / | / | 9,5 | / | / | / | / | |
| Temps de pause arôme ou charge (min) | 1 | / | / | / | 1 | / | / | 1,5 | / | / | / | / | |
| Temps séchage (min) | 5/3 | 4 | 4/2,5 | 3 | 3 | 2,5 | 3,5 | 3/2,5 | 1,75 | 1 | 1 | 0 | |
| Température air (°C) | 20 | 20 | 30 | 30 | 30 | 30 | 30 | 30 | 20 | 20 | 20 | 20 | |
| % dragéification | 9,1 | / | 15,9 | 19,8 | 19,8 / | 25,226,1 | | / | 29,9 | / | / | / | 29,9 |

### Pregeflo C100

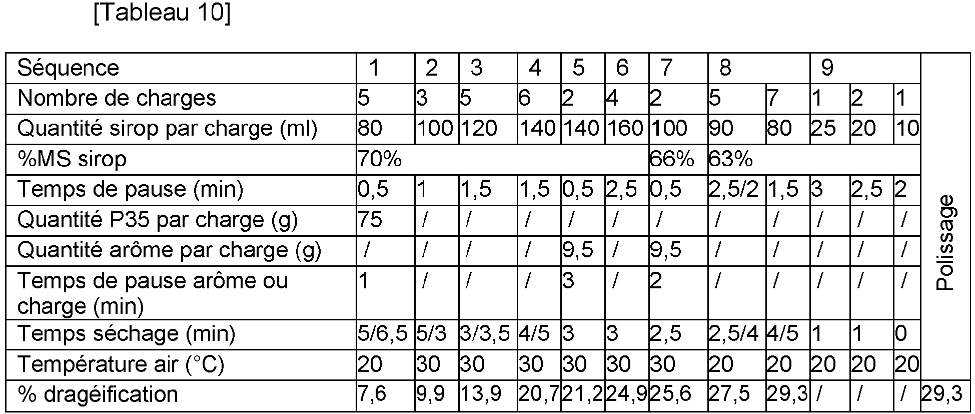

Les chewing-gums dragéifiés sont récupérés et analysés selon les méthodes expérimentales décrites ci-dessus.

Les propriétés des chewing-gums de dureté, croustillance et de blancheur sont reportées dans le Tableau 11 ci-après.

**[Tableau 11]**

| | **Dureté (N)** | **croustillance nombre de pics)** | **Indice de blancheur** | **Uniformité de la couleur** |
|---|---|---|---|---|
| CLEARGUM TA 90 | 9,2 | 15 | 2,3 | - |
| LYCASIN HBC | 8,8 | 10 | 1,9 | + |
| CLEARGUM CO03 | 8,1 | 21 | 36,9 | -- |
| KLEPTOSE LINECAPS LAB4118 | 7,8 | 18 | 35,0 | 0 |
| GENU PECTIN PAN | 7,1 | 16 | 39,3 | + |
| TICAPAN 311 | 7,3 | 26 | 71,3 | + |
| LYCOAT RS 780 | 7,0 | 6 | 71,5 | 0 |
| GOMME ARABIQUE | 10,6 | 8 | 48,7 | + |
| PREGEFLO C100 | 11,3 | 4 | 74,2 | + |

Les chewing-gums dont le revêtement comprend de l'amidon prégélatinisé non modifié chimiquement (PREGEFLO C100) présente les meilleurs résultats en termes de dureté, croustillance, indice de blancheur et uniformité de la couleur.

Par ailleurs, de manière tout à fait surprenante, il a été observé que l'indice de blancheur du revêtement cristallin dur des chewing-gums à base de l'amidon prégélatinisé non modifié chimiquement selon l'invention est équivalent à celui du revêtement cristallin dur des chewing-gums à base de gomme arabique et de dioxyde de titane, qui quant à lui, présente un indice de blancheur de 74,3. Il est bien connu que le dioxyde de titane est intensément utilisé dans les revêtements des produits dragéifié pour donner une couleur blanche audit revêtement et, en même temps, pour cacher les défauts visuels venant d'autres constituants, tel que la gomme arabique.

### EXEMPLE 2 - Fabrication de chewing gums dragéifiés à partir de pré-mélanges

### Préparation des pré-mélanges de polyol et d'amidon prégélatinisé

Pour préparer les pré-mélanges, ou « compositions pré-mélangées », on mélange à sec et à froid à l'aide d'un mélangeur la poudre de maltitol P200 avec l'amidon prégélatinisé dans les proportions indiquées dans le Tableau ci-dessus.

### Préparation des sirops de dragéification

Hormis pour la solution de dragéification utilisant la gomme arabique qui est fabriquée comme à l'exemple 1, on utilise les pré-mélanges décrits précédemment pour préparer les solutions de dragéification. En effet, il est préférable pour la gomme arabique qui se dégrade de ne pas réaliser de prémélange afin de ne pas dégrader la gomme arabique et d'ajouter la solution de gomme arabique au dernier moment à 70°C.

La solution de dragéification comprenant les amidons prégélatinisés non modifiés chimiquement est préparée en solubilisant dans de l'eau à 85°C les pré-mélanges et en maintenant la température.

Les solutions de dragéification présentent 70% de matière sèche et sont maintenues à 70°C avant utilisation.

Les propriétés de viscosité des différentes solutions de dragéification sont reprises dans le Tableau 12 ci-dessous.

**[Tableau 12]**

| | | | Viscosité solution dragéification (Pa.s) | | | | | | |
|---|---|---|---|---|---|---|---|---|---|
| Reference | Type liant | Quantité liant (%MS/Total MS solution dragéification) | 80°C | 70 °C | 60°C | 50°C | 40 °C | 30°C | 20°C |
| Gomme arabique | comparatif | 5% | 0,052 | 0,073 | 0,115 | 3,195 | 0,356 | 0,705 | 1,522 |
| Pregeflo C100 | Invention | 4% | 0,23 | 0,27 | 0,34 | 3,45 | 0,62 | 0,92 | 1,46 |
| Pregeflo L100 G | invention | 3% | 0,04 | 3,043 | 3,056 | 3,08 | 3,13 | 3,22 | 3,41 |
| Pregeflo M | invention | 3% | 0,083 | 0,107 | 0,144 | 3,2 | 3,3 | 3,47 | 0,8 |

### Fabrication des chewing-gums dragéifiés

Les chewing-gums sont préparés de manière similaire à celle décrite que dans l'exemple 1, c'est-à-dire que le protocole établi pour les amidons pré6gélatinisés non modifiés de pois et de maïs reste similaire à celui utilisé pour le maïs cireux.

Les chewing-gums dragéifiés sont récupérés et analysés selon les méthodes expérimentales décrites ci-dessus.

Les propriétés des chewing-gums de dureté, croustillance et de blancheur sont reportées dans le Tableau 13 ci-dessous.

**[Tableau 13]**

| | **Dureté (N)** | **Croustillance (nombre de pics)** | **Indice de blancheur** | **Uniformité de la couleur** |
|---|---|---|---|---|
| Gomme arabique | 10,6 | 28 | 48,7 | + |
| Pregeflo C100 | 11,3 | 34 | 74,2 | + |
| Pregeflo L100 G | 11,3 | 50 | 76,1 | ++ |
| Pregeflo M | 11,2 | 47 | 74,5 | ++ |

Comme dans le cas des chewing-gums lors de la fabrication desquels le sirop de dragéification n'a pas été préparé à partir d'une composition pré-mélangée, les chewing-gums à base d'amidon prégélatinisé non modifié chimiquement (PREGEFLO C100, PREGEFLO L100 G, PREGEFLO M) présentent les meilleurs résultats en termes de dureté, croustillance, indice de blancheur et uniformité de la couleur.

### EXEMPLE 3 - Fabrication de chewing-gums dragéifiés à partir de pré-mélanges à l'échelle pilote

### Préparation des sirops de dragéification

Les sirops de dragéification à base de maltitol sont fabriqués de manière similaire à celle de l'exemple 2.

Les solutions de dragéification à base de xylitol sont fabriquées de manière similaire à celle de l'exemple 2, hormis les différences suivantes :
- en ce qui concerne l'essai avec l'amidon prégélatinisé de maïs cireux non modifié, un prémélange de xylitol et d'amidon prégélatinisé est réalisé de manière similaire à l'exemple 2, le xylitol poudre remplaçant le maltitol poudre
- les matières sèches des solutions de dragéification à base de xylitol présentent une matière sèche de 75%, au lieu de 70% pour celles à base de maltitol.

Les solutions de dragéification sont mélangées et maintenues à 75°C avant utilisation.

### Fabrication des chewing-gums dragéifiés

On place 50 kg centres de chewing-gums dans une turbine automatique de type DRIAM DRIACOATER 1200. Les solutions de dragéification sont appliquées sur les centres selon les conditions indiquées dans les Tableaux 14 et 15 ci-dessous. Pour la dragéification xylitol, il n'est pas rajouté de xylitol sous forme de poudre lors du procédé.

### Dragéification maltitol

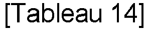

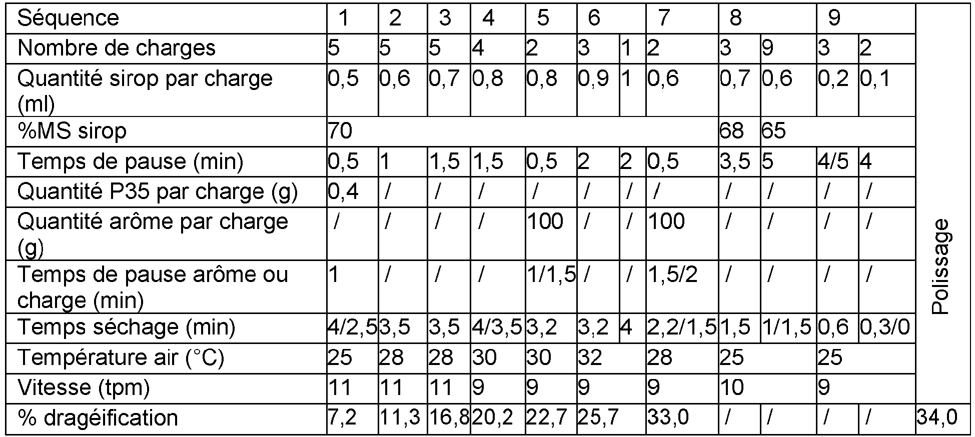

### Dragéification xylitol

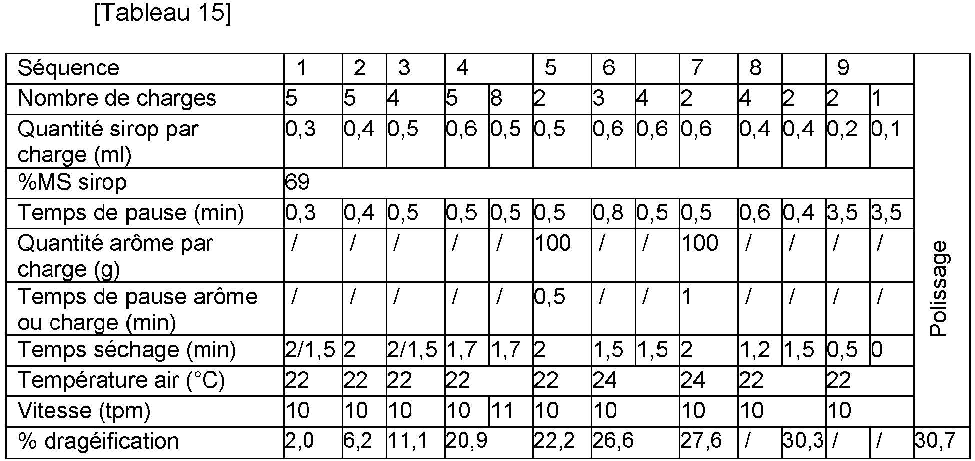

### Le Tableau 16 ci-dessous répertorie les résultats obtenus à l'échelle pilote :

**[Tableau 16]**

| Polyol | Liant | Type essai | Viscosité solution dragéificatio n (20°C) | Quantité liant (%MS/Total MS solution dragéificatio n) | Duret é (N) | Croustillanc e (nombre de pics) | Indice de blancheu r | Uniformit é de la couleur |
|---|---|---|---|---|---|---|---|---|
| Maltito l | Gomme arabique | comparati f | 1,522 | 5% | 10,1 | | 51,4 | + |
| Maltito l | Pregeflo C10 0 | Invention | 1,46 | 4% | 15,8 | 32 | 83,5 | + |
| Xylitol | Pregeflo C10 0 | invention | 1,3 | 4% | 10,6 | 43 | 50,8 | + |

### Résistance au choc

La résistance du revêtement cristallin dur des chewing-gums obtenus par dragéification à partir d'un sirop à base de maltitol et d'un autre agent liant, (70% en poids de matière sèche par rapport au poids total du sirop) a été mesurée.

Cette résistance se traduit par le pourcentage de coins cassés, répertorié en Tableau 17.

**[Tableau 17]**

| | **Coins cassés (%)** |
|---|---|
| GOMME ARABIQUE - 5% | 12,5% |
| PREGEFLOO C100 - 4% | 12,5% |
| TicaPan 311 - 5% | 18,0% |
| Genu Pectin Pan - 1% | 32,0% |

La résistance du revêtement cristallin dur des chewing-gums à base de l'amidon prégélatinisé non modifié chimiquement selon l'invention est équivalente à celle du revêtement cristallin dur des chewing-gums à base de gomme arabique. Les revêtements à base de TicaPan 311 et Genu Pectin Pan sont plus cassants.

L'invention ne se limite pas aux exemples 1 à 3 décrits ci-avant, seulement à titre d'exemple, mais elle englobe toutes les variantes que pourra envisager l'homme de l'art dans le cadre de la protection recherchée.

### EXEMPLE 4 - Influence des quantités d'amidon prégélatinisé sur les propriétés des produits dragéifiés obtenus

Le protocole utilisé dans cet essai est similaire à celui de l'exemple 1 : il diffère dans la quantité de PREGEFLO C100 (0%, 1% ou 2% au lieu de 4% en poids sec de la solution de dragéification).

Les chewing-gums ainsi obtenus sont dégustés à l'aveugle par trois personnes et sont notés de la note allant de 1 à 10 pour la croustillance, la durée de la croustillance et le bruit dans la bouche lorsque le chewing-gum est maché. La dureté mesurée par le texturomètre et l'indice de blancheur sont également mesurés.

Le Tableau 18 ci-dessous répertorie les moyennes obtenues :

**[Tableau 18]**

| Liant | Croustilla nce | Durée croustillance | Bruit dans la bouche | Indice de blancheur | Dureté (N) |
|---|---|---|---|---|---|
| Pas de liant | 4 | 1 | 1 | 81,2 | 11,2 |
| 1% Pregeflo C100 | 7 | 5 | 5 | 74,7 | 15,2 |
| 2% Pregeflo C100 | 6 | 4 | 4 | 77,2 | 15,8 |

Il a été observé que les chewing-gums dont la couche dragéifiée est exempte d'amidon prégélatinisé ont une surface collante et plus fragile que celles des chewing-gums comprenant l'amidon prégélatinisé. La faible croustillance de ce chewing-gum disparaît immédiatement pendant la mache.

Les chewing-gums comprenant 1% d'amidon prégélatinisé dans la solution de dragéification présente une croustillance similaire à ceux comprenant 2%.

La blancheur des chewing-gums est améliorée lorsque la solution de dragéification comprend plus d'amidon prégélatinisé.

## Revendications

1. Utilisation d'un mélange d'au moins un agent sucrant et au moins un amidon prégélatinisé non modifié chimiquement pour améliorer l'indice de blancheur du revêtement cristallin dur d'un produit dragéifié, ledit amidon n'ayant pas subi de modifications chimiques,
ledit revêtement et ledit mélange étant exempt de dioxyde de titane, et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

2. Utilisation selon la revendication 1 **caractérisée en ce que** lequel ledit mélange comprend :
- entre 95 et 99% en poids dudit agent sucrant relatif à la masse totale de matière sèche du mélange,
- entre 1 et 5% en poids dudit amidon relatif à la masse totale de matière sèche du mélange.

3. Utilisation selon la revendication 1 ou 2, **caractérisée en ce que** l'amidon prégélatinisé non modifié chimiquement est un amidon natif prégélatinisé ayant subi uniquement un traitement de prégélatinisation, de préférence ledit l'amidon natif prégélatinisé est choisi parmi l'amidon de pois natif prégélatinisé, l'amidon de maïs natif prégélatinisé ou l'amidon maïs cireux natif prégélatinisé.

4. Utilisation selon l'une des revendications 1 à 3, **caractérisée en ce que** l'agent agent sucrant est un polyol, de préférence le polyol est choisi parmi le sorbitol, le mannitol, le maltitol, le xylitol, l'isomalt, l'érythritol et le lactitol ou un mélange de ceux-ci, de préférence le maltitol ou le xylitol.

5. Produit de confiserie dragéifié comportant un revêtement cristallin dur comprenant un mélange d'au moins un agent sucrant et au moins un amidon prégélatinisé non modifié chimiquement, ledit amidon n'ayant pas subi de modifications chimiques,
ledit revêtement et ledit mélange étant exempt de dioxyde de titane,
et dans lequel ledit mélange comprend :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

6. Produit de confiserie dragéifié selon la revendication 5 **caractérisée en ce que** lequel ledit mélange comprend :
- entre 95 et 99% en poids dudit agent sucrant relatif à la masse totale de matière sèche du mélange,
- entre 1 et 5% en poids dudit amidon relatif à la masse totale de matière sèche du mélange.

7. Produit de confiserie dragéifié selon la revendication 5 ou 6, **caractérisé en ce qu'**il est un chewing-gum.

8. Produit de confiserie dragéifié selon l'une des revendications 5 à 7, **caractérisé en ce que** l'amidon prégélatinisé non modifié chimiquement est un amidon natif, de préférence ledit l'amidon natif prégélatinisé est choisi parmi l'amidon de pois prégélatinisé non modifié chimiquement, l'amidon de maïs natif prégélatinisé non modifié chimiquement ou l'amidon maïs cireux natif prégélatinisé non modifié chimiquement.

9. Produit de confiserie dragéifié selon l'une des revendications 5 à 8, **caractérisé en ce que** l'agent agent sucrant est un polyol, de préférence le polyol est choisi parmi le sorbitol, le mannitol, le maltitol, le xylitol, l'isomalt, l'érythritol et le lactitol ou un mélange de ceux-ci, de préférence le maltitol ou le xylitol.

10. Procédé d'obtention par dragéification dure d'un revêtement cristallin dur autour d'un noyau, le procédé comprenant les étapes suivantes :
- préparation d'un sirop de dragéification en mélangeant au moins un agent sucrant et au moins un amidon prégélatinisé non modifié chimiquement avec un solvant,
- création à la surface du noyau d'un revêtement cristallin par au moins une application dudit sirop de dragéification ;
ledit amidon n'ayant pas subi de modifications chimiques,
ledit revêtement et ledit sirop ainsi préparé étant exempt de dioxyde de titane,
et dans lequel ledit revêtement et ledit sirop comprennent :
- entre 80 et 99,90% en poids dudit agent sucrant relatif à la masse totale de matière sèche du mélange, préférentiellement entre 90 et 99,90% et
- entre 0,1 et 20% en poids dudit amidon relatif à la masse totale de matière sèche du mélange, préférentiellement entre 0,1 et 10%.

11. Procédé selon la revendication 10 **caractérisé en ce que** ledit mélange comprend :
- entre 95 et 99% en poids dudit agent sucrant relatif à la masse totale de matière sèche du mélange,
- entre 1 et 5% en poids dudit amidon relatif à la masse totale de matière sèche du mélange.

12. Procédé selon la revendication 10 ou 11, **caractérisé en ce que** l'amidon prégélatinisé non modifié chimiquement est un amidon natif, de préférence ledit l'amidon natif prégélatinisé est choisi parmi l'amidon de pois prégélatinisé non modifié chimiquement, l'amidon de maïs prégélatinisé non modifié chimiquement ou l'amidon maïs cireux prégélatinisé non modifié chimiquement.

13. Procédé selon l'une des revendications 10 à 12, **caractérisé en ce que** l'agent agent sucrant est un polyol, de préférence le polyol est choisi parmi le sorbitol, le mannitol, le maltitol, le xylitol, l'isomalt, l'érythritol et le lactitol ou un mélange de ceux-ci, de préférence le maltitol ou le xylitol.

14. Procédé selon l'une des revendications 10 à 13, **caractérisé en ce que** le sirop de dragéification comprend de 30% à 85% en poids de matière sèche par rapport au poids total du sirop.

15. Procédé selon l'une des revendications 10 à 14, **caractérisé en ce que** le polyol est sous forme de poudre et le sirop de dragéification est préparé en mélangeant le polyol, l'amidon prégélatinisé non modifié chimiquement avec le solvant, le mélange étant ensuite chauffé.

16. Composition pré-mélangée sèche de dragéification comprenant un mélange d'au moins un agent sucrant et d'au moins un amidon prégélatinisé non modifié chimiquement, ledit amidon n'ayant pas subi de modifications chimiques,
ladite composition étant exempte de dioxyde de titane,
**caractérisée en ce que** la composition comprend :
- entre 80 et 99,90% en poids dudit agent sucrant relatif à la masse totale de matière sèche de la composition, préférentiellement entre 90 et 99,90 %, tout préférentiellement entre 95 et 99% et
- entre 0, 1 et 20% en poids dudit amidon relatif à la masse totale de matière sèche de la composition, préférentiellement entre 0,1 et 10%, tout préférentiellement entre 1 et 5%.

## Patentansprüche

1. Verwendung einer Mischung aus mindestens einem Süßungsmittel und mindestens einer chemisch nicht modifizierten vorgelatinierten Stärke zur Verbesserung des Weißgrades der harten kristallinen Beschichtung eines dragierten Produkts, wobei die Stärke keinen chemischen Modifikationen unterzogen wurde, die Beschichtung und die Mischung frei von Titandioxid sind und wobei die Mischung umfasst:
- zwischen 80 und 99,90 Gew.-% des Süßungsmittels, bezogen auf die Gesamtmasse der Trockensubstanz der Mischung, vorzugsweise zwischen 90 und 99,90 Gew.-%, und
- zwischen 0,1 und 20 Gew.-% der Stärke, bezogen auf die Gesamtmasse der Trockensubstanz der Mischung, vorzugsweise zwischen 0,1 und 10 Gew.-%.

2. Verwendung nach Anspruch 1, **dadurch gekennzeichnet, dass** die Mischung umfasst:
- zwischen 95 und 99 Gew.-% des Süßungsmittels, bezogen auf die Gesamtmasse der Trockensubstanz der Mischung,
- zwischen 1 und 5 Gew.-% der Stärke, bezogen auf die Gesamtmasse der Trockensubstanz der Mischung.

3. Verwendung nach Anspruch 1 oder 2, **dadurch gekennzeichnet, dass** die chemisch nicht modifizierte vorgelatinierte Stärke eine native vorgelatinierte Stärke ist, die nur einer Vorgelatinierungsbehandlung unterzogen wurde, vorzugsweise ist die native vorgelatinierte Stärke ausgewählt aus nativer vorgelatinierter Erbsenstärke, nativer vorgelatinierter Maisstärke oder nativer vorgelatinierter Wachsmaisstärke.

4. Verwendung nach einem der Ansprüche 1 bis 3, **dadurch gekennzeichnet, dass** das Süßungsmittel ein Polyol ist, wobei das Polyol vorzugsweise aus Sorbit, Mannit, Maltit, Xylit, Isomalt, Erythrit und Lactit oder einer Mischung davon ausgewählt ist, vorzugsweise Maltit oder Xylit.

5. Dragiertes Süßwarenprodukt mit einer harten kristallinen Beschichtung, die eine Mischung aus mindestens einem Süßungsmittel und mindestens einer chemisch nicht modifizierten vorgelatinierten Stärke umfasst, wobei die Stärke keinen chemischen Modifikationen unterzogen wurde,
die Beschichtung und die Mischung frei von Titandioxid sind
und wobei die Mischung umfasst:
- zwischen 80 und 99,90 Gew.-% des Süßungsmittels, bezogen auf die Gesamtmasse der Trockensubstanz der Mischung, vorzugsweise zwischen 90 und 99,90 Gew.-%, und
- zwischen 0,1 und 20 Gew.-% der Stärke, bezogen auf die Gesamtmasse der Trockensubstanz der Mischung, vorzugsweise zwischen 0,1 und 10 Gew.-%.

6. Dragiertes Süßwarenprodukt nach Anspruch 5, **dadurch gekennzeichnet, dass** die Mischung umfasst:
- zwischen 95 und 99 Gew.-% des Süßungsmittels, bezogen auf die Gesamtmasse der Trockensubstanz der Mischung,
- zwischen 1 und 5 Gew.-% der Stärke, bezogen auf die Gesamtmasse der Trockensubstanz der Mischung.

7. Dragiertes Süßwarenprodukt nach Anspruch 5 oder 6, **dadurch gekennzeichnet, dass** es ein Kaugummi ist.

8. Dragiertes Süßwarenprodukt nach einem der Ansprüche 5 bis 7, **dadurch gekennzeichnet, dass** die chemisch nicht modifizierte vorgelatinierte Stärke eine native Stärke ist, vorzugsweise ist die vorgelatinierte native Stärke ausgewählt aus chemisch nicht modifizierter vorgelatinierter Erbsenstärke, chemisch nicht modifizierter vorgelatinierter Maisstärke oder chemisch nicht modifizierter vorgelatinierter Wachsmaisstärke.

9. Dragiertes Süßwarenprodukt nach einem der Ansprüche 5 bis 8, **dadurch gekennzeichnet, dass** das Süßungsmittel ein Polyol ist, wobei das Polyol vorzugsweise aus Sorbit, Mannit, Maltit, Xylit, Isomalt, Erythrit und Lactit oder einer Mischung davon ausgewählt ist, vorzugsweise Maltit oder Xylit.

10. Verfahren zur Herstellung einer harten kristallinen Beschichtung um einen Kern durch Hartdragieren, wobei das Verfahren die folgenden Schritte umfasst:
- Herstellung eines Dragier-Sirups durch Mischen mindestens eines Süßungsmittels und mindestens einer chemisch nicht modifizierten vorgelatinierten Stärke mit einem Lösungsmittel,
- Erzeugen einer kristallinen Beschichtung auf der Oberfläche des Kerns durch mindestens einmaliges Auftragen des Dragier-Sirups;
wobei die Stärke nicht chemisch modifiziert wurde,
die so hergestellte Beschichtung und der Sirup frei von Titandioxid sind
und wobei die Beschichtung und der Sirup umfassen:
- zwischen 80 und 99,90 Gew.-% des Süßungsmittels, bezogen auf die Gesamtmasse der Trockensubstanz der Mischung, vorzugsweise zwischen 90 und 99,90 Gew.-%, und
- zwischen 0,1 und 20 Gew.-% der Stärke, bezogen auf die Gesamtmasse der Trockensubstanz der Mischung, vorzugsweise zwischen 0,1 und 10 Gew.-%.

11. Verfahren nach Anspruch 10, **dadurch gekennzeichnet, dass** die Mischung umfasst:
- zwischen 95 und 99 Gew.-% des Süßungsmittels, bezogen auf die Gesamtmasse der Trockensubstanz der Mischung,
- zwischen 1 und 5 Gew.-% der Stärke, bezogen auf die Gesamtmasse der Trockensubstanz der Mischung.

12. Verfahren nach Anspruch 10 oder 11, **dadurch gekennzeichnet, dass** die chemisch nicht modifizierte vorgelatinierte Stärke eine native Stärke ist, vorzugsweise ist die vorgelatinierte native Stärke ausgewählt aus chemisch nicht modifizierter vorgelatinierter Erbsenstärke, chemisch nicht modifizierter vorgelatinierter Maisstärke oder chemisch nicht modifizierter vorgelatinierter Wachsmaisstärke.

13. Verfahren nach einem der Ansprüche 10 bis 12, **dadurch gekennzeichnet, dass** das Süßungsmittel ein Polyol ist, wobei das Polyol vorzugsweise aus Sorbit, Mannit, Maltit, Xylit, Isomalt, Erythrit und Lactit oder einer Mischung davon ausgewählt ist, vorzugsweise Maltit oder Xylit.

14. Verfahren nach einem der Ansprüche 10 bis 13, **dadurch gekennzeichnet, dass** der Dragier-Sirup 30 bis 85 Gew.-% Trockensubstanz, bezogen auf die Gesamtmasse des Sirups, umfasst.

15. Verfahren nach einem der Ansprüche 10 bis 14, **dadurch gekennzeichnet, dass** das Polyol in Pulverform vorliegt und der Dragier-Sirup durch Mischen des Polyols, der chemisch nicht modifizierten vorgelatinierten Stärke mit dem Lösungsmittel hergestellt wird, wobei die Mischung anschließend erhitzt wird.

16. Vorgemischte, trockene Dragier-Zusammensetzung, umfassend eine Mischung aus mindestens einem Süßungsmittel und mindestens einer chemisch nicht modifizierten vorgelatinierten Stärke, wobei die Stärke keinen chemischen Modifikationen unterzogen wurde,
wobei die Zusammensetzung frei von Titandioxid ist,
**dadurch gekennzeichnet, dass** die Zusammensetzung umfasst:
- zwischen 80 und 99,90 Gew.-% des Süßungsmittels, bezogen auf die Gesamtmasse der Trockensubstanz der Zusammensetzung, vorzugsweise zwischen 90 und 99,90 Gew.-%, besonders bevorzugt zwischen 95 und 99 Gew.-%, und
- zwischen 0,1 und 20 Gew.-% der Stärke, bezogen auf die Gesamtmasse der Trockensubstanz der Zusammensetzung, vorzugsweise zwischen 0,1 und 10 Gew.-%, besonders bevorzugt zwischen 1 und 5 Gew.-%.

## Claims

1. Use of a mixture of at least one sweetening agent and at least one chemically unmodified pregelatinized starch to improve the crunchiness of the hard crystalline coating of a sugar-coated product, said starch not having undergone chemical modifications,
said coating and said mixture being free of titanium dioxide, and wherein said mixture comprises:
- between 80 and 99.90% by weight of said sweetening agent relative to the total mass of dry matter of the mixture, preferentially between 90 and 99.90% and
- between 0.1 and 20% by weight of said starch relative to the total mass of dry matter of the mixture, preferentially between 0.1 and 10%.

2. The use according to claim 1, **characterized in that** said mixture comprises:
- between 95 and 99% by weight of said sweetening agent relative to the total mass of dry matter of the mixture,
- between 1 and 5% by weight of said starch relative to the total mass of dry matter of the mixture.

3. The use according to claim 1 or 2, **characterized in that** the chemically unmodified pregelatinized starch is a pregelatinized native starch having undergone only pregelatinization treatment, preferably said pregelatinized native starch is selected from pregelatinized native pea starch, pregelatinized native corn starch or pregelatinized native waxy starch.

4. The use according to one of claims 1 to 3, **characterized in that** the sweetening agent is a polyol, preferably the polyol is selected from sorbitol, mannitol, maltitol, xylitol, isomalt, erythritol and lactitol or a mixture thereof, preferably maltitol or xylitol.

5. A sugar-coated confectionery product including a hard crystalline coating comprising a mixture of at least one sweetening agent and at least one chemically unmodified pregelatinized starch, said starch not having undergone chemical modifications,
said coating and said mixture being free of titanium dioxide,
and wherein said mixture comprises:
- between 80 and 99.90% by weight of said sweetening agent relative to the total mass of dry matter of the mixture, preferentially between 90 and 99.90% and
- between 0.1 and 20% by weight of said starch relative to the total mass of dry matter of the mixture, preferentially between 0.1 and 10%.

6. The sugar-coated confectionery product according to claim 5, **characterized in that** said mixture comprises:
- between 95 and 99% by weight of said sweetening agent relative to the total mass of dry matter of the mixture,
- between 1 and 5% by weight of said starch relative to the total mass of dry matter of the mixture.

7. The sugar-coated confectionery product according to claim 5 or 6, **characterized in that** it is a chewing gum.

8. The sugar-coated confectionery product according to any of claims 5 to 7, **characterized in that** the chemically unmodified pregelatinized starch is a native starch, preferably said pregelatinized native starch is selected from chemically unmodified pregelatinized pea starch, chemically unmodified pregelatinized native corn starch or chemically unmodified native waxy corn starch.

9. The sugar-coated confectionery product according to one of claims 5 to 8, **characterized in that** the sweetening agent is a polyol, preferably the polyol is selected from sorbitol, mannitol, maltitol, xylitol, isomalt, erythritol and lactitol or a mixture thereof, preferably maltitol or xylitol.

10. A method for producing a hard crystalline coating around a core by hard sugar-coating, the method comprising the following steps:
- preparing a sugar-coating syrup by mixing at least one sweetening agent and at least one chemically unmodified pregelatinized starch with a solvent,
- creating a crystalline coating on the surface of the core by at least one application of said sugar-coating syrup;
said starch not having undergone chemical modifications,
said coating and said syrup thus prepared being free of titanium dioxide,
and wherein said coating and said syrup comprise:
- between 80 and 99.90% by weight of said sweetening agent relative to the total mass of dry matter of the mixture, preferentially between 90 and 99.90% and
- between 0.1 and 20% by weight of said starch relative to the total mass of dry matter of the mixture, preferentially between 0.1 and 10%.

11. The method according to claim 10, **characterized in that** said mixture comprises:
- between 95 and 99% by weight of said sweetening agent relative to the total mass of dry matter of the mixture,
- between 1 and 5% by weight of said starch relative to the total mass of dry matter of the mixture.

12. The method according to claim 10 or 11, **characterized in that** the chemically unmodified pregelatinized starch is a native starch, preferably said pregelatinized native starch is selected from chemically unmodified pregelatinized pea starch, chemically unmodified pregelatinized corn starch or chemically unmodified pregelatinized waxy corn starch.

13. The method according to one of claims 10 to 12, **characterized in that** the sweetening agent is a polyol, preferably the polyol is selected from sorbitol, mannitol, maltitol, xylitol, isomalt, erythritol and lactitol or a mixture thereof, preferably maltitol or xylitol.

14. The method according to one of claims 10 to 13, **characterized in that** the sugar-coating syrup comprises from 30% to 85% by weight of solids relative to the total weight of the syrup.

15. The method according to one of claims 10 to 14, **characterized in that** the polyol is in powder form and the sugar-coating syrup is prepared by mixing the polyol, the chemically unmodified pregelatinized starch with the solvent, with the mixture being then heated.

16. A dry, pre-mixed sugar-coating composition comprising a mixture of at least one sweetening agent and at least one chemically unmodified pregelatinized starch, said starch not having undergone chemical modifications,
said composition being free of titanium dioxide,
**characterized in that** the composition comprises:
- between 80 and 99.90% by weight of said sweetening agent relative to the total mass of dry matter of the composition, preferentially between 90 and 99.90%, most preferentially between 95 and 99% and
- between 0, 1 and 20% by weight of said starch relative to the total mass of dry matter of the composition, preferentially between 0.1 and 10%, most preferentially between 1 and 5%.
